(19) Europäisches Patentamt / European Patent Office / Office européen des brevets

(11) **EP 2 259 038 A1**

(12) **EUROPEAN PATENT APPLICATION**
published in accordance with Art. 153(4) EPC

(43) Date of publication:
08.12.2010 Bulletin 2010/49

(51) Int Cl.:
*G01K 7/00* (2006.01)     *G01N 27/26* (2006.01)
*G01N 27/28* (2006.01)     *G01N 27/327* (2006.01)
*G01N 27/416* (2006.01)

(21) Application number: 09724854.6

(22) Date of filing: 27.03.2009

(86) International application number:
PCT/JP2009/001425

(87) International publication number:
WO 2009/119116 (01.10.2009 Gazette 2009/40)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 27.03.2008 JP 2008082811
27.03.2008 JP 2008082812

(71) Applicant: **Panasonic Corporation**
**Kadoma-shi**
**Osaka 571-8501 (JP)**

(72) Inventor: **The designation of the inventor has not yet been filed**

(74) Representative: **Eisenführ, Speiser & Partner**
**Postfach 10 60 78**
**28060 Bremen (DE)**

(54) **ENVIRONMENT TEMPERATURE MEASURING METHOD, LIQUID SAMPLE MEASURING METHOD, AND MEASURING DEVICE**

(57)     A cavity (17) in which an analysis sample is held and measurement is performed, and an electrode system (14) for measuring the concentration of the sample in the cavity (17) are provided on a biosensor (1). A secondary cell (21) and an environment temperature sensor (9) are provided inside the measuring device (2). The environment temperature during charging is measured in real time by specifying the environment temperature during charging from the time required to charge the secondary cell (21) and the environment temperature during charging. The measured analysis sample concentration is corrected for temperature with high accuracy from the environment temperature information obtained during charging, in a temperature correction step 09, and thus an analysis result with extremely high accuracy is obtained.

FIG. 18(a)

Measurement of various
correction categories

↓

Various correction
category information

↓

**computing means**

information about
various correction
categories

environment
temperature
information

information about
environment
temperature during
charging

08

measurement object
concentration information

—210

measurement
object
concentration

memory means —208

↓

display
component —211

# FIG. 18(b)

**Description**

TECHNICAL FIELD

The present invention relates to a measuring device for measuring a highly infectious or polluting analysis sample, and more particularly relates to a constitution and measurement method that give high analysis accuracy with a measuring device that makes use of a disposable sensor.

BACKGROUND ART

In the field of measuring highly infectious or polluting analysis samples with small devices, and especially with biosensing devices used to protect the health of people, disposable sensors are used in which the part of the sensor that comes into contact with the sample can be removed.

A biosensing device is a device in which the measurement elements of a sensor that recognizes an analysis object include the capability to recognize the molecules of a biological sample, such as microbes, enzymes, or antibodies, and a biological material is used as a molecular labeling element. Specifically, with these biosensing devices, in the course of recognizing a specific component and measuring its concentration, a biologically derived material is used every time a targeted molecule is identified, a signal proportional to the concentration is generated, etc. In particular, biosensors that make use of enzyme reactions or antibody immune reactions have seen considerable practical application, and are widely used in the medical and food preparation fields. Many different quantification methods have been developed, such as electrochemical analysis, colorimetry, emission spectrometry, and so forth.

Of these biosensors, with measuring devices used in the medical field related to the health of people, because of the importance of the results, there is a need for better measurement accuracy even though the sensors are disposable. Therefore, with biosensing devices used in the medical field, the analysis value for the concentration of a specimen is subjected to various corrections in order to obtain higher measurement accuracy. For example, there is temperature correction, hematocrit value correction, correction of measurement error due to analogs, and correction for interfering substances in electrochemical analysis. In turn, the optimization of sensors and calibration curves by lot control and so forth also comes under the heading of correction.

Of these, temperature is one of the most important factors to be corrected. For instance, in the measurement of the concentration of a specific component in a sample, if the sample temperature is higher than a reference temperature at which the calibration curve was set (although this cannot be stated unequivocally), there will be acceleration at various stages of the analysis, and the measurement results will probably be higher than the actual values. On the other hand, if the sample temperature is lower than the reference temperature, the measurement results may have the opposite problem.

The standard way to solve this problem is to subject the specimen concentration value to temperature correction by providing an environment temperature sensor inside the measuring device and using the value thus produced as the sample temperature during measurement. This method, however, merely involves using the environment temperature as the sample temperature during measurement, so if there is a discrepancy between the environment temperature and the temperature of the sample, it will be difficult to perform accurate correction. In view of this, there has been a need for a method for measuring and correcting the temperature of the specimen concentration measurement component (see Patent Citations 1 and 2, for example).

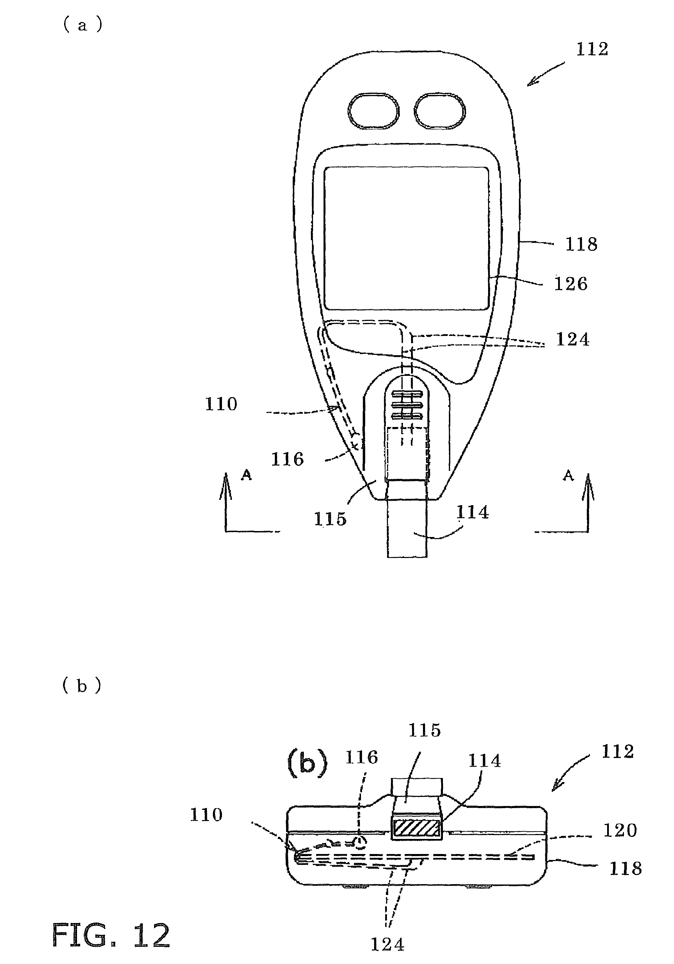

Patent Citation 1 discloses a plan view and a cross section of a measuring device in which a sensor is inserted (see FIGS. 12 (a) and 12 (b)). This blood glucose level measuring and display device 112 is provided with a temperature sensor 110 via a lead wire 124, and the environment temperature is measured near a sensor 114 inserted into the measuring device. Consequently, this minimizes the effect of the heat of air that accumulates in the measuring device, or heat produced from the substrate, so temperature correction can be performed on information about the measured specimen concentration.

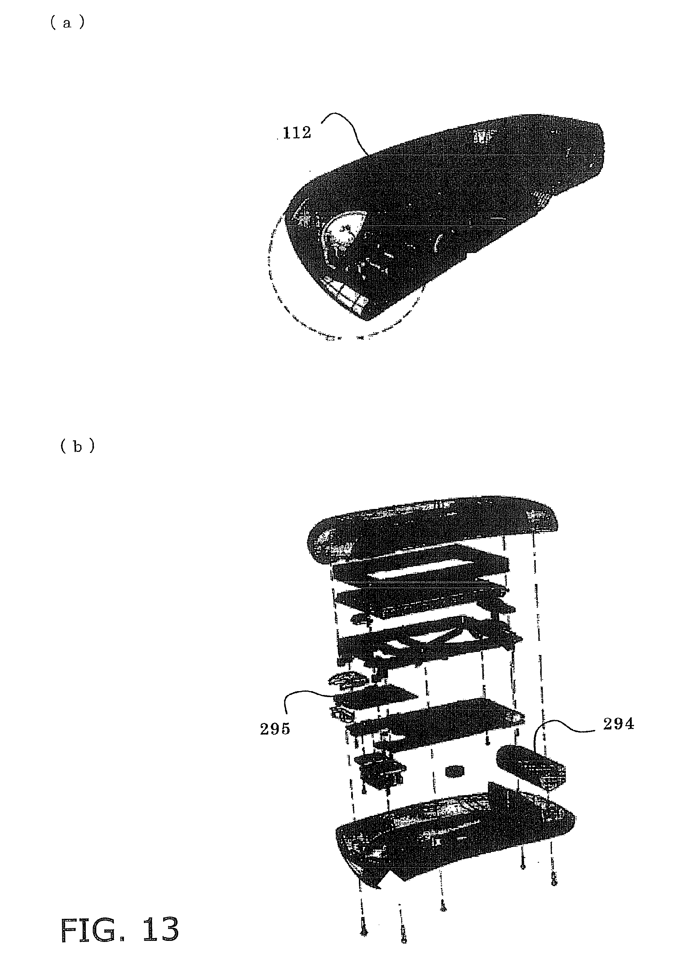

In Patent Citation 2 is discussed the constitution shown in FIG. 13 (a), which is a plan view of a measuring device into which a sensor is inserted. A chargeable battery 294 is provided inside the measuring device, and the battery 294 can be electrically connected to the device by docking the device in a docking station 200 (not shown) when the battery 294 is to be charged.

Patent Citation 1: Japanese Laid-Open Patent Application 2007-10317
Patent Citation 2: Published Japanese Translation No. 2007-526440 of the PCT International Publication

DISCLOSURE OF INVENTION

However, the following problems are encountered with the constitutions discussed in the above-mentioned Patent Citations 1 and 2.

Specifically, with the above constitution, the environment temperature inside the measuring device and near the sensor 114 can be measured by the temperature sensor 110 and a temperature detecting system 39, but when a heat generating material having a heat generating action is provided to the measuring device, the environment temperature inside the measuring device rises, which is a problem in that the accuracy of environment temperature measurement suffers.

Furthermore, with the constitution discussed in Patent Citation 1, during measurement it is necessary to perform operations such as bending the lead wire 124 to the vicinity of the sensor, which means that extra work is entailed.

Also, with the constitution discussed in Patent Citation 2, when the heat generating material is a part mounted on a substrate, it is difficult to accurately detect changes in temperature near the sensor because of heat propagation through the substrate. Also, a heat seal has to be provided, and since the internal configuration is limited by the heat seal, this hampers efforts to make the device more compact.

The present invention solves these problems encountered in the past, and it is an object thereof to provide an environment temperature measuring method, a liquid sample measuring method, and a measuring device with which, even when a heat generating material is provided inside a measuring device, the effect of heat from the heat generating material can be eliminated, and the concentration of the analysis object can be corrected very accurately.

The environment temperature measuring method of the present invention involves measuring an environment temperature on the basis of electrical information measured by the environment temperature sensor in a measuring device in which a heat generating material and an environment temperature sensor are provided inside a housing, with said method comprising a heat generation operating time measurement step and an external environment temperature calculation step. The heat generation operating time measurement step is a step of measuring the operating time during heat generation by a heat generating material provided inside the housing. The external environment temperature calculation step is a step of calculating the external environment temperature outside the housing on the basis of the operating time of the heat generating material and the internal environment temperature inside the housing.

Here, to eliminate the effect of heat from the heat generating material provided inside the measuring device, first the operating time of the heat generating material is measured. Then, the environment temperature outside the housing (the external environment temperature) from which the effect of heat from the heat generating material has been eliminated is calculated on the basis of the operating time of this heat generating material and the measurement result at the environment temperature sensor disposed inside the housing (the internal environment temperature).

The concept of accurately calculating the external environment temperature outside the housing here can be considered to be the same as calculating the external environment temperature at the point when a specimen (liquid sample) is deposited on a biosensor inserted into the measuring device, that is, the temperature of the liquid sample itself.

Consequently, the accurately calculated external environment temperature outside the housing can be used as the temperature for temperature correction in the measurement of the liquid sample concentration. Thus, the concentration of the liquid sample measured with the measuring device will be more accurate.

The liquid sample measuring method of the present invention involves measuring the concentration of a specific component in a liquid sample that has been deposited on a biosensor mounted in a measuring device provided with a heat generating material and an environment temperature sensor inside a housing, with said method comprising a specimen concentration measurement step and an external environment temperature correction step. The specimen concentration measurement step is a step of measuring the concentration of a specific component in a liquid sample deposited on a biosensor. The external environment temperature correction step is a step of correcting the specific component concentration on the basis of the external environment temperature outside the housing as found by the environment temperature measuring method.

Here, with a measuring device in which a heat generating material and an environment temperature sensor are provided inside a housing, the results of measuring the concentration of the liquid sample obtained in the specimen concentration measurement step are corrected in the external environment temperature correction step by using the external environment temperature outside the housing of the measuring device obtained on the basis of the internal environment temperature inside the housing and the operating time of the heat generating material in the temperature information calculation step.

Consequently, the internal environment temperature inside the housing of the measuring device and the elapsed time since the start of the heat generation of the heat generating material can be measured in real time. Consequently, the external environment temperature outside the housing can be identified by canceling out the effect of a rise in the internal environment temperature inside the housing caused by heat generation from the heat generating material. Highly accurate temperature correction can then be performed on the measured analysis object concentration on the basis of the external environment temperature information outside the housing thus identified.

The measuring device of the present invention comprises a housing, a heat generating material, an environment temperature sensor, an operating time measurement component, and a computer. The heat generating material is provided inside the housing. The environment temperature sensor is provided inside the housing, and measures the internal environment temperature inside the housing. The operating time measurement component measures the operating time of the heat generating material. The computer calculates information about the external environment temperature outside the housing on the basis of the internal environment temperature and the operating time during heat generation of the heat generating material.

Here, for example, with a measuring device in which a biosensor is inserted and which measures the concentration of a liquid sample deposited on a biosensor, for example, the external environment temperature outside the housing is calculated on the basis of the operating time of a heat generating material and the internal environment temperature inside the housing where the heat generating material is provided.

Consequently, the internal environment temperature inside the housing of the measuring device and the elapsed time since the start of heat generation from the heat generating material can be measured in real time. This means that the external environment temperature outside the housing can be identified by canceling out the effect of a rise in the internal environment temperature inside the housing caused by heat generation from the heat generating material. Highly accurate temperature correction can then be performed on the measured analysis object concentration on the basis of the external environment temperature information outside the housing thus identified.

BRIEF DESCRIPTION OF DRAWINGS

FIG. 1 is a flowchart illustrating a measurement algorithm used in an embodiment of the present invention;
FIG. 2 is a simplified diagram of the structure of a measuring device in this same embodiment;
FIG. 3 is a simplified diagram of the structure of a biosensor in this same embodiment;
FIG. 4 is a simplified diagram of the structure of a temperature sensor and the area around a sensor holding section in this same embodiment;
FIG. 5 is a simplified diagram illustrating a state in which the biosensor has been mounted to the sensor holding section in this same embodiment;
FIG. 6 (a) is a diagram illustrating an environment temperature calculation step used during temperature correction of various correction categories in this same embodiment;
FIG. 6 (b) is a diagram illustrating a step of temperature correction of various correction categories in this same embodiment;
FIG. 7 is a diagram illustrating the environment temperature on the inside of a measuring device during charging in this same embodiment;
FIG. 8 is a diagram illustrating (part of) the environment temperature on the inside of a measuring device during charging in this same embodiment;
FIG. 9 is a diagram illustrating the charging current and charging voltage during charging in this same embodiment;
FIG. 10 is a diagram illustrating an environment temperature calculation method during charging in this same embodiment;
FIG. 11 is a diagram illustrating an environment temperature calculation method during charging in this same embodiment;
FIG. 12 is a plan view and a front view illustrating a conventional measuring device in which a biosensor is inserted;
FIG. 13 is a cross section and an exploded oblique view of a conventional measuring device with a battery;
FIG. 14 is a flowchart of a measurement algorithm used in another embodiment of the present invention;
FIG. 15 is a simplified diagram illustrating the measuring device in this same embodiment;
FIG. 16 is a simplified diagram illustrating the temperature sensor and the area around the sensor holding section in this same embodiment;
FIG. 17 is a simplified diagram illustrating the state when a biosensor is mounted to the sensor holding section in this same embodiment;
FIG. 18 (a) is a diagram illustrating the environment temperature calculation step in this same embodiment;
FIG. 18 (b) is a diagram illustrating the temperature correction step for various correction categories in this same embodiment;
FIG. 19 (a) is a diagram illustrating the time change indicating the error after correction, and the environment temperature during charging in this same embodiment (when the outside air temperature was 10°C);
FIG. 19 (b) is a diagram illustrating the time change indicating the error after correction, and the environment temperature during charging in this same embodiment (when the outside air temperature was 20°C);
FIG. 19 (c) is a diagram illustrating the time change indicating the error after correction, and the environment temperature during charging in this same embodiment (when the outside air temperature was 30°C);
FIG. 20 (a) is a diagram illustrating the time change indicating the error after correction, and the environment temperature during charging in this same embodiment (when the outside air temperature was 10°C; time axis: 0 to 10 minutes);

FIG. 20 (b) is a diagram illustrating the time change indicating the error after correction, and the environment temperature during charging in this same embodiment (when the outside air temperature was 20°C; time axis: 0 to 10 minutes);

FIG. 20 (c) is a diagram illustrating the time change indicating the error after correction, and the environment temperature during charging in this same embodiment (when the outside air temperature was 30°C; time axis: 0 to 10 minutes);

FIG. 21 is a diagram illustrating the difference in temperature sensor response versus elapsed charging time in this same embodiment;

FIG. 22 is a diagram illustrating the error between the calculated environment temperature and the temperature detected by the temperature sensor in this same embodiment;

FIG. 23 is a graph in which the three characteristic curves shown in FIG. 10 are superimposed;

FIG. 24 is a graph detailing the elapsed time after the completion of charging in FIG. 10;

FIG. 25 (a) is a graph detailing the elapsed time before and after charging at an outside air temperature of 30°C;

FIG. 25 (b) is a graph detailing the elapsed time before and after charging at an outside air temperature of 20°C;

FIG. 25 (c) is a graph detailing the elapsed time before and after charging at an outside air temperature of 10°C; and

FIG. 26 is a simplified diagram of an environment temperature sensor disposed near a heat generating material and near a sensor holding section in another embodiment of the present invention.

EXPLANATION OF REFERENCE

| 1 | biosensor |
| 2 | measuring device |
| 3 | sensor holding section (biosensor holding section) |
| 4 | switching circuit |
| 5 | voltage application means |
| 6 | current/voltage conversion circuit (current/voltage conversion means) |
| 7 | A/D conversion circuit |
| 8 | memory means (memory device) |
| 9 | environment temperature sensor |
| 10 | computation means (computer) |
| 11 | display component |
| 12 | cover |
| 12a | insulated substrate |
| 13 | spacer |
| 14a | electrode system (working electrode) |
| 14b | electrode system (counter electrode) |
| 15 | reagent layer |
| 17 | cavity |
| 18 | measurement component |
| 19 | clock (operating time measurement component) |
| 20 | sample supply path |
| 21 | secondary cell (heat generating material) |
| 31 | measurement-use connecting terminal |
| 33 | charging circuit |
| 36 | air hole |
| 201 | biosensor |
| 202 | measuring device |
| 203 | sensor holding section (biosensor holding section) |
| 204 | switching circuit |
| 205 | voltage application means |
| 206 | current/voltage conversion circuit (current/voltage conversion means) |
| 207 | A/D conversion circuit |
| 208 | memory means (memory device) |
| 209a | environment temperature sensor (first environment temperature sensor) |
| 209b | environment temperature sensor (second environment temperature sensor) |

| 209aa, 209ab | environment temperature sensor (first environment temperature sensor) |
| 209ba, 209bb | environment temperature sensor (second environment temperature sensor) |
| 210 | computation means (computer) |
| 211 | display component |
| 214 | electrode system |
| 219 | clock (operating time measurement component) |
| 221 | secondary cell (heat generating material) |
| 231 | measurement-use connecting terminal |
| 233 | charging circuit (charging IC) |

DETAILED DESCRIPTION OF THE PREFERRED EMBODIMENTS

The measuring device pertaining to an embodiment of the present invention, as well as an environment temperature measuring method and liquid sample measuring method in which this device is used, will now be described in detail through reference to the drawings.

Embodiment 1

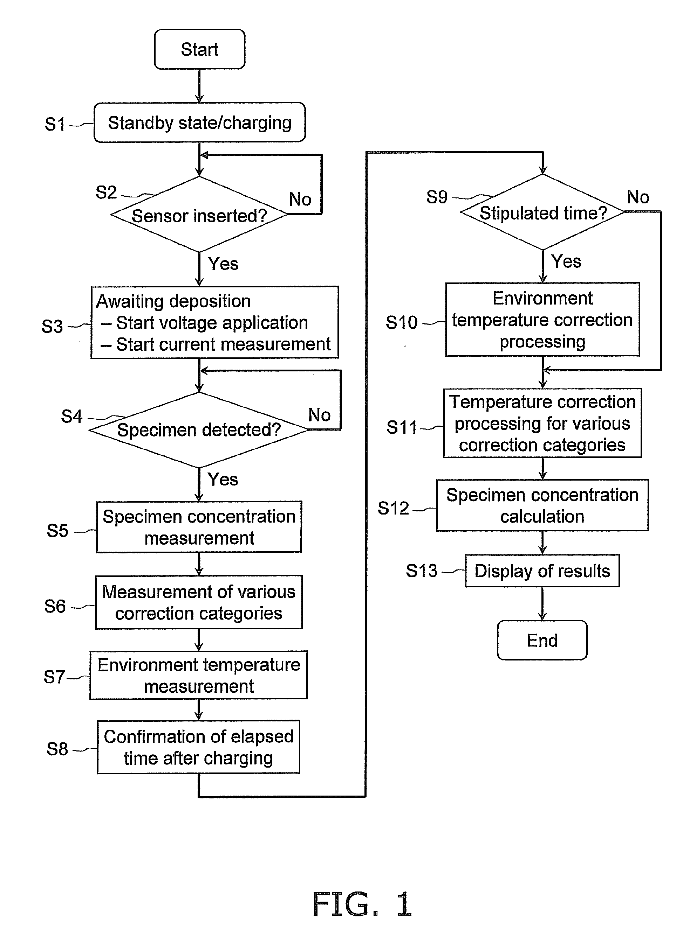

A measuring device 2 pertaining to this embodiment will be described on the basis of FIGS. 1 to 11.

Here, a blood glucose level measuring device that measures glucose concentration using blood as the analysis object is given and described as an example of the measuring device 2. What is shown in FIGS. 1 to 11 is nothing but an embodiment of the present invention, and the scope of the invention is not limited to or by these drawings.

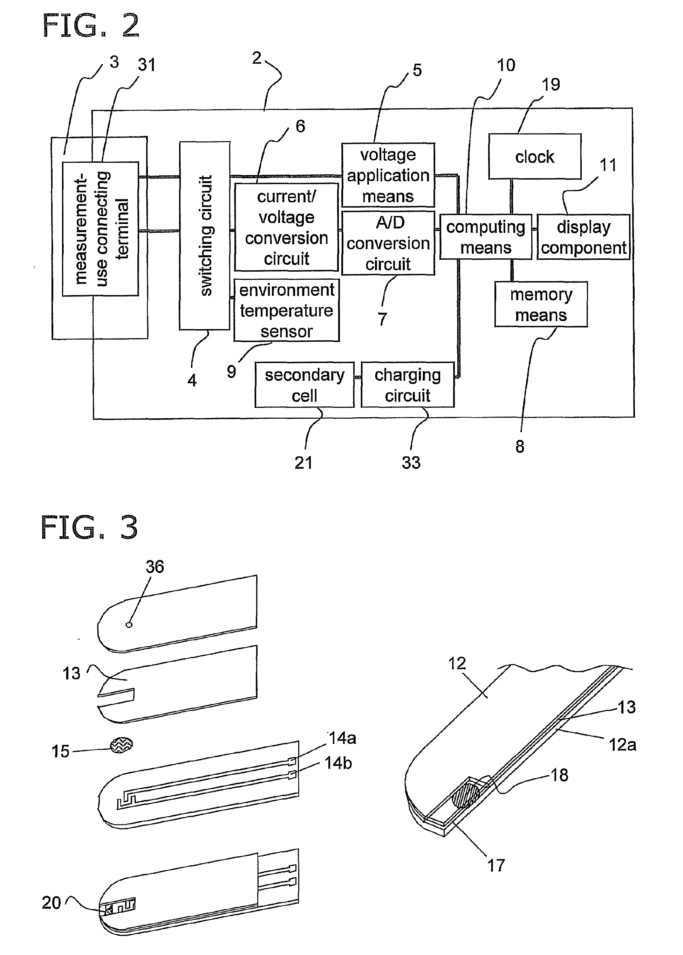

FIG. 1 is a flowchart showing the overall algorithm when a biosensor 1 pertaining to this embodiment is mounted in the measuring device 2, and then the concentration of the specimen serving as the measurement object is calculated. FIG. 2 is a simplified diagram of the constitution of the measuring device 2 pertaining to this embodiment.

Next, the biosensor 1, which is a constituent element of the measuring device and method pertaining to this embodiment, will be described in detail. FIG. 3 is an exploded oblique view of the configuration of the measuring device 2.

As shown in FIG. 3, the biosensor 1 comprises a cover 12, a spacer 13, a reagent layer 15, and an insulated substrate 12a that are laminated over one another.

The cover 12 has an air hole 36 in its center. The spacer 13 has a sample supply path 20 that is substantially rectangular in shape. The reagent layer 15 supports a reagent that undergoes an enzyme reaction with a specific component in a liquid sample. The insulated substrate 12a is composed of polyethylene terephthalate or the like, and an electrode layer is formed on its surface. This electrode layer is divided with a laser or the like, forming a working electrode 14a, a counter electrode 14b, and a detecting electrode (not shown) as an electrode system 14.

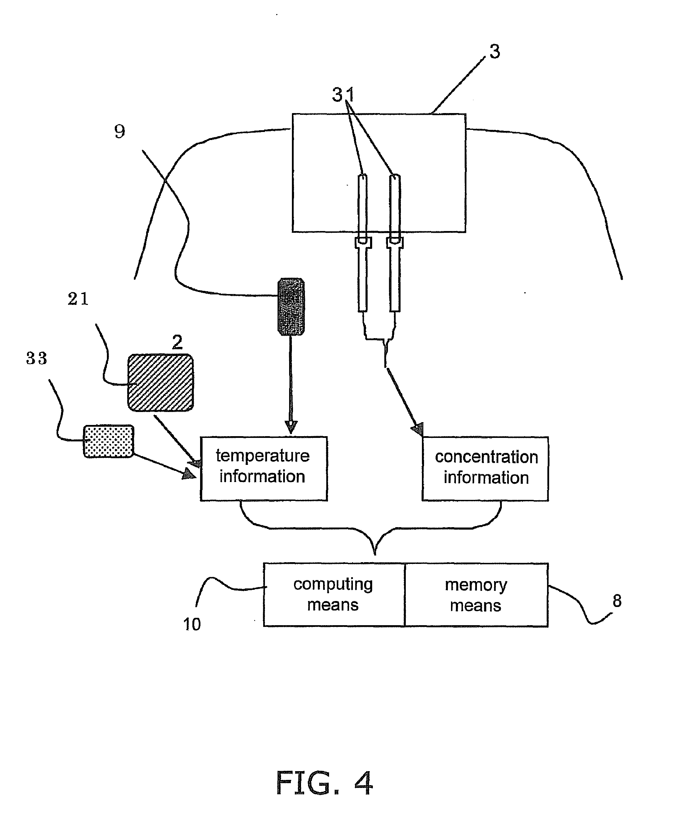

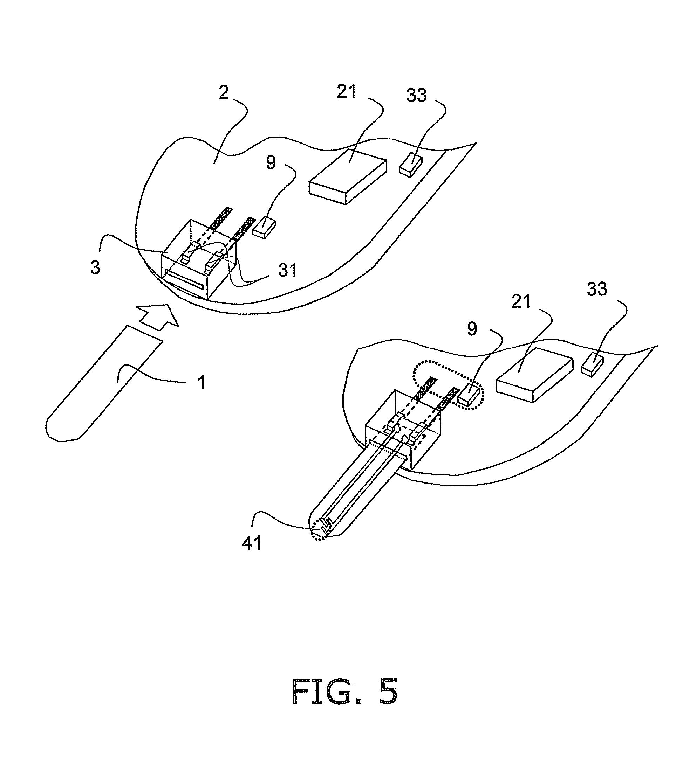

Next, the measuring device 2, which is one of the main constituent elements of this embodiment, will be described. FIG. 4 is a detail view of the main components of the portion where the biosensor 1 is mounted to the measuring device 2. FIG. 5 is an oblique view of the state before and after mounting to a sensor holding section (biosensor holding section) 3 that removably holds the biosensor 1.

As shown in FIGS. 2, 4, and 5, the measuring device 2 in this embodiment comprises the sensor holding section 3 that removably holds the biosensor 1. Measurement-use connecting terminals 31, which are connection terminals for forming corresponding electrical contacts along with the electrode system 14 on the biosensor 1, are disposed in the interior of the sensor holding section 3. In other words, the measurement-use connecting terminals 31 and the electrode system 14 on the biosensor 1 are disposed at positions where they come into contact with each other.

Each terminal (not shown) of the measurement-use connecting terminals 31 is in contact with an electrode for measuring the concentration of an analysis object or a detecting electrode for detecting that a specimen (liquid sample) has been introduced into a cavity 17, for example, and is further in contact with an electrode for measuring various correction categories. When voltage is applied between these electrodes, the electrode that applies the voltage in a switching circuit 4 is switched. The applied voltage is outputted from a voltage application means 5 made up of a DAC (digital to analog converter) or the like, and is applied between the specified electrodes.

The current obtained by electrochemical reaction under the voltage applied to the various electrodes (this is also called the response current) is converted into voltage by a current/voltage conversion circuit 6. The voltage value obtained here is converted into a digital signal by an A/D conversion circuit 7. Specimen concentration information is then computed by a computing means 10 on the basis of this digital signal.

The correction categories referred to here include hematocrit value correction and correction for interfering substances, for example. Naturally, all of the correction categories with which electrochemical measurement is possible are included in these correction categories. Also, the specimen concentration is subjected to temperature correction during specimen concentration measurement, and tables for calculating various correction categories with respect to the environment temperature are stored ahead of time in a memory means 8, which consists of an EEP ROM (electrically erasable programmable read only memory), a flash memory, or the like. Temperature correction is performed during specimen concentration computation by using tables for calculating various correction categories and temperature information from an environment temperature sensor 9 consisting of a thermistor or the like. The specimen concentration that is ultimately computed by the computing means 10 is displayed on a display component 11.

A rechargeable secondary cell (heat generating material) 21 is installed in the measuring device 2, and a charging circuit 33 is provided for performing charging. The memory means 8 holds tables for calculating the above-mentioned correction categories, etc., and also holds an environment temperature calculation table that is necessary when calculating the environment temperature outside the measuring device 2 from the environment temperature measured inside the measuring device 2 during charging.

A clock (operating time measurement component) 19 for keeping track of the date and time at which a concentration was measured, the charging duration (charging duration information), and so forth.

Next, the process of measuring a specimen concentration with the measuring device 2 in this embodiment will be described through reference to the flowchart in FIG. 1.

First, in step S1, the measuring device 2 is either in the midst of charging or is in a standby state in which it awaits a command from the user or awaits the insertion of a biosensor.

Then, in step S2, the biosensor 1 is inserted into the measuring device 2.

Next, in step S3, the insertion of the biosensor 1 results in a state of awaiting the deposition of a specimen, the connection of the electrode to which voltage is applied is set at the switching circuit 4, and the application of voltage for deposition detection to the measurement-use connecting terminals 31 is begun. The measurement of current is then begun at the A/D conversion circuit 7.

Next, when a specimen is deposited in step S4, in steps S5, S6, and S7 the switching circuit 4 successively switches the electrode to which voltage will be applied and the applied voltage level to specified settings, and voltage is applied for measuring specimen concentration, various correction categories, and environment temperature. At this point, the current flowing between specific electrodes of the biosensor 1, or to a thermistor (the environment temperature sensor 9), is converted to voltage, and the specimen concentration, various correction categories, and environment temperature are measured in their respective steps.

Then, in step S8, after the measurement categories related to the calculation of specimen concentration have been measured by the measuring device 2, elapsed time at the timing of specimen deposition since the start or end of charging is measured by the clock 19 (see FIG. 2).

The step of measuring the charging duration with the clock 19 may be carried out in parallel with the above-mentioned measurement of specimen concentration, or may be carried out in parallel with the measurement of specimen concentration only when the charging duration is within a certain range. That is, the timing at which the internal environment temperature is correct can be appropriately set according to the environment temperature measured by the thermistor (the environment temperature sensor 9), the level of heat generated by the heat generating material, or the like.

Then, in step S9, if the detected duration is within the range of a preset stipulated duration, in step S 10 it is determined that the environment temperature measured inside the measuring device 2 has deviated from the actual temperature outside the measuring device 2, and environment temperature correction is performed. That is, the external environment temperature is calculated by using information from an external environment temperature calculation table stored in the memory means, on the basis of the internal environment temperature measured by the environment temperature sensor 9 and the charging duration. On the other hand, if the detected duration is outside of the range of the stipulated duration, it is determined that the environment temperature inside the measuring device 2 is the same as the environment temperature outside the measuring device 2, and environment temperature correction is not performed. In other words, the internal environment temperature measured with the thermistor 9 is used directly as the external environment temperature.

After this, in step S11 temperature correction processing is performed for various correction categories using the determined environment temperature, in step S12 the specimen concentration is calculated, and in step S 13 the result is displayed on the display component 11.

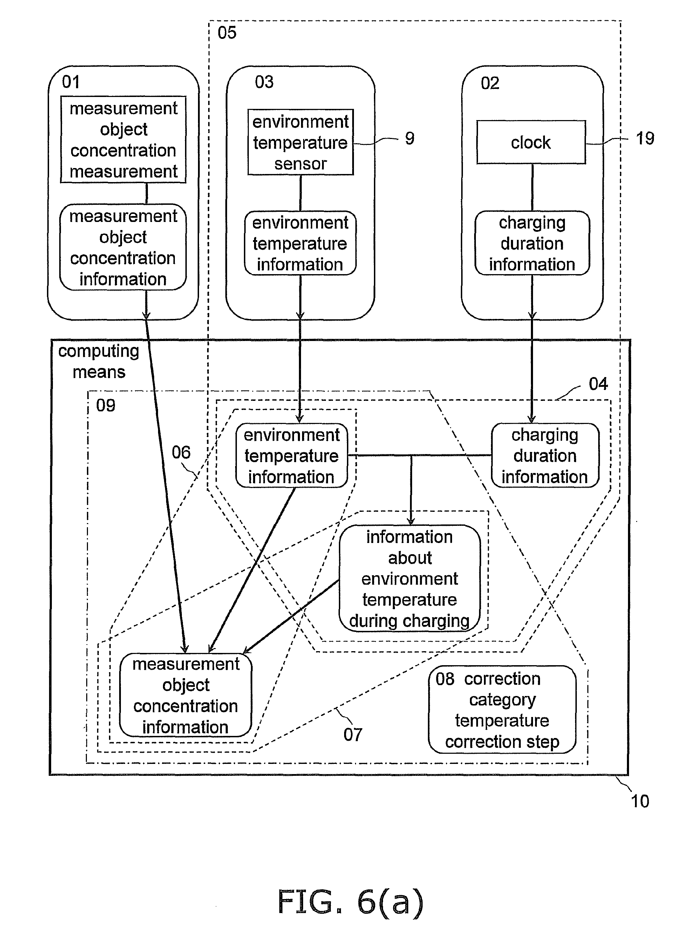

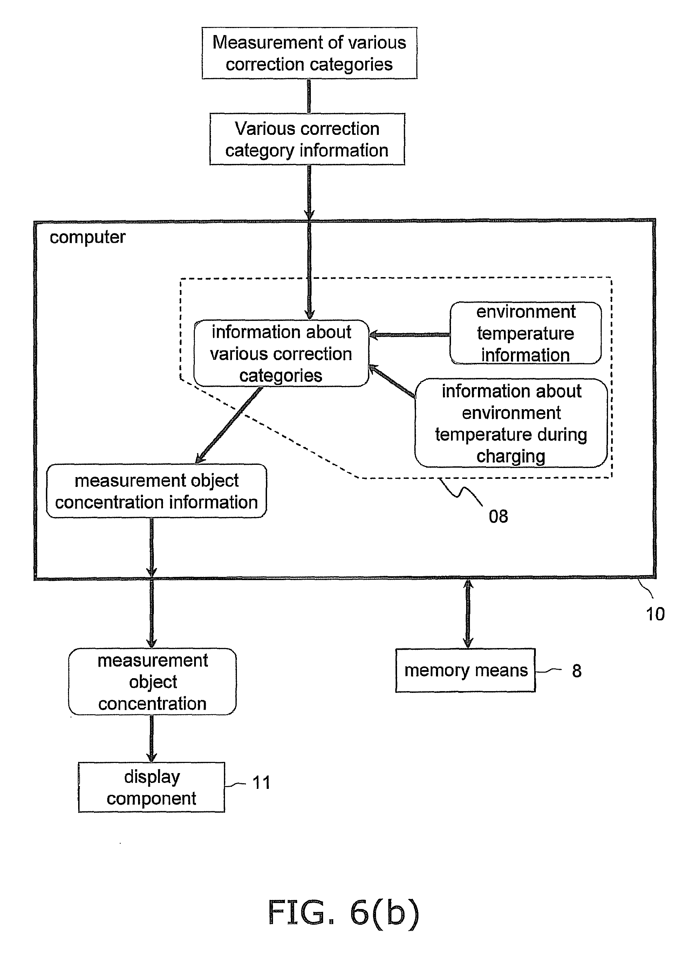

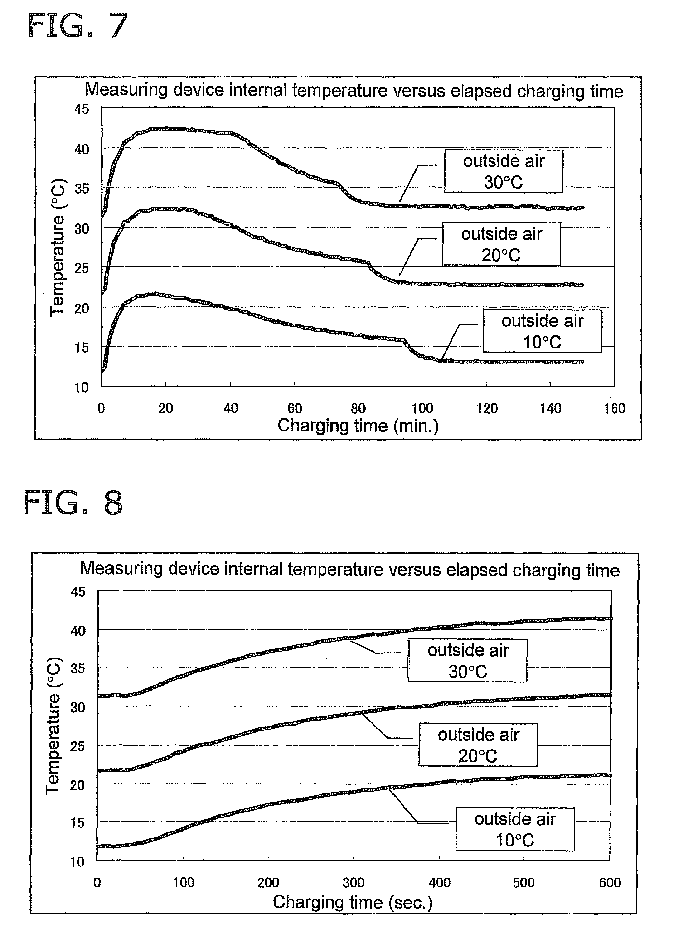

The environment temperature correction processing will now be described through reference to FIGS. 6 (a), 6 (b), 7, and 8. FIG. 6 (a) shows the flow in the step of calculating the environment temperature used during temperature correction for the various correction categories. FIG. 6 (b) shows the flow in the temperature correction step for the various correction categories (correction step). FIG. 7 shows data obtained by actually measuring the temperature change on the inside of the measuring device 2 as the charging time elapses, in a state in which the environment temperature outside the measuring device 2 is held constant at 10°C, 20°C, and 30°C. FIG. 8 shows in particular the temperature change data up to 10 minutes after the start of charging in FIG. 7.

Here, if the temperature change outside the measuring device 2 is gradual, then immediately after the start of charging, the environment temperature measured inside the measuring device 2 will of course also be the same as the temperature outside the measuring device 2. However, once charging begins, a charging current of at least 400 mA flows to the battery itself and to the charging IC, capacitor, coil, resistor, or other such electrical parts used for controlling the charging. If we let P be the power (W), I be the current (A), and R be the resistance ($\Omega$) here, then the power P found by

$$P = I \times I \times R$$

is consumed by the charging current and the resistance component had by each of the electrical parts, and heat is emitted from the electrical parts.

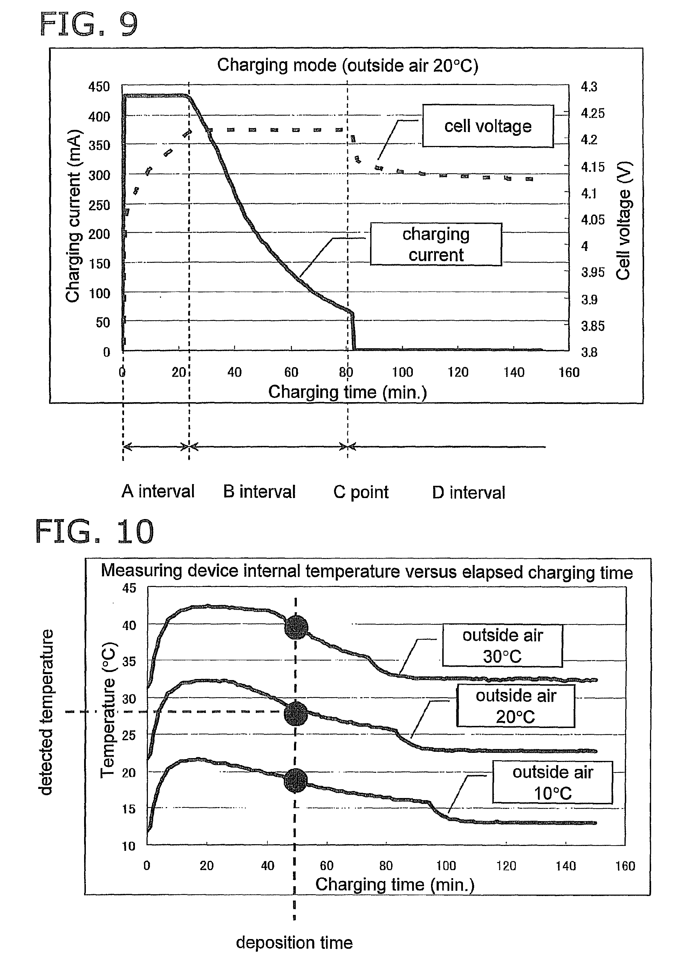

A charging profile at an outside temperature of 20°C as shown in FIG. 9 will be used to describe the charging of a secondary cell. The cell used here is a lithium ion cell, which is compact and has high capacity, but there is the risk of damage to the cell if it is over-charged or over-discharged. Accordingly, during charging a predetermined profile must be used.

First, the voltage of the cell at the start of charging is measured, and it is determined whether or not the cell voltage is within a chargeable range. If it is within a chargeable range, the device enters a pre-charging mode, and charging begins at a low current. Then a constant current mode continues for an A interval, and charging proceeds at a high constant current (430 mA in FIG. 9). In this constant current mode, a large amount of current flows and the parts generate a great deal of heat, so the temperature inside the measuring device rises sharply.

In FIG. 9, because the cell still had a remaining charge, immediately after the start of charging the pre-charging mode is skipped and the constant current mode is entered. In the constant current mode, the cell voltage rises gradually, and when the cell voltage reaches 4.215 V about 24 minutes after the start, the mode changes to a constant voltage mode for a B interval, and charging proceeds with the cell voltage held at the same level. If it is then determined during constant voltage mode charging that the charging current is at or under a predetermined completion level (65 mA), charging is ended at point C (about 84 minutes after the start), and thereafter the device is on standby for a D interval. After charging is complete, the charging current is 0 mA. Accordingly, the internal heat of the parts is dispersed and the temperature inside the measuring device 2 drops sharply, after which it settles at the temperature on the outside of the measuring device 2.

Next, the flow of the environment temperature calculation step will be described through reference to FIG. 6 (a).

First, when charging is commenced, the calculation of the environment temperature during temperature correction is begun in a temperature information calculation step 05. In the charging duration measurement step (heat generation operating time measurement step) 02, charging duration information after the start of charging is acquired from the clock 19, and this information is sent to the computing means 10 as charging duration start time information. After this, when the biosensor 1 is mounted to the sensor holding section 3 and specimen concentration is started, the internal environment temperature information detected by the thermistor (the environment temperature sensor 9) is sent to the computing means 10 in the environment temperature measurement step (internal environment temperature calculation step). In the charging duration measurement step 02, information about the charging duration at the time of specimen deposition, which indicates the start of secondary cell measurement, is acquired from the clock 19, and this information is sent to the computing means 10 as specimen deposition time information. In the step of measuring the environment temperature during heat generation (the external environment temperature calculation step) 04, it is found from the time information at specimen deposition and the charging start time information how much time has elapsed since the start of charging, and a calculation is made on the basis of this measured charging duration and the internal environment temperature measured by the thermistor (the environment temperature sensor 9). At this point, if the charging duration is at or above a certain level, the temperature of the thermistor 9 can be used directly, so it is also determined whether to calculate or to use the temperature of the thermistor 9 directly.

That is, as shown in FIG. 7, the temperature inside the measuring device 2 returns to about the same as the environment temperature at the start of charging 120 minutes after the start of charging. Accordingly, the environment temperature inside the measuring device 2 as measured by the thermistor (the environment temperature sensor 9) is determined to coincide substantially with the environment temperature outside the measuring device 2. As shown in FIG. 8, the temperature inside the measuring device 2 is equal to the environment temperature at the start of charging for up to 60 seconds after the start of charging, so the same determination as above is performed. Thus, if the deposition time is no more than 60 seconds after the start of charging, or is more than 120 minutes later, the environment temperature measured by the thermistor (the environment temperature sensor 9) is determined to be the temperature for temperature correction of the various correction categories in the internal environment temperature correction step (temperature correction step) 06. Using this temperature for temperature correction, correction is performed on the information about the concentration of the measurement object as calculated in the secondary cell measurement step 01 (corresponds to the measurement object concentration measurement step 01 in FIG. 6 (a)).

In the step 04 of measuring the environment temperature during heat generation, if the time at specimen deposition is less than more than 60 seconds after the start of charging and less than 120 minutes later, the corrected environment temperature outside the measuring device 2 is calculated from the environment temperature inside the measuring device 2 measured by the thermistor (the environment temperature sensor 9). The memory means 8 holds ahead of time the data in FIG. 7 (an external environment temperature calculation table) indicating the transition of the environment temperature inside the measuring device 2 and the charging time at various environment temperatures outside the measuring device 2, and the environment temperature outside the measuring device 2 can be calculated from the environment temperature inside the measuring device 2 and the time at deposition.

More specifically, as shown in FIG. 10, the time at deposition is 50 minutes after the start of charging, and if we assume that the temperature measured by the thermistor (the environment temperature sensor 9) at this point (the internal environment temperature indicating the environment temperature inside the measuring device 2) is 28°C, then the external environment temperature outside the measuring device 2 turns out to be 20°C. In the external environment temperature correction step (temperature correction step) 07, the external environment temperature of 20°C thus found is determined as the temperature correction-use temperature for the various correction categories. Using this temperature correction-use temperature, the measurement object concentration information calculated in the specimen concentration measurement step 01 is subjected to correction.

In the correction category temperature correction step 08, which is a step of correcting by temperature (see FIG. 6 (a)), the various correction categories are subjected to temperature correction. In FIG. 10, a situation is illustrated in which the detected temperature at the specimen deposition time is included in the data of FIG. 7 as a temperature calculation table (environment temperature calculation table), but if it is not included in the data, it may be calculated using the data of FIG. 7 as a reference.

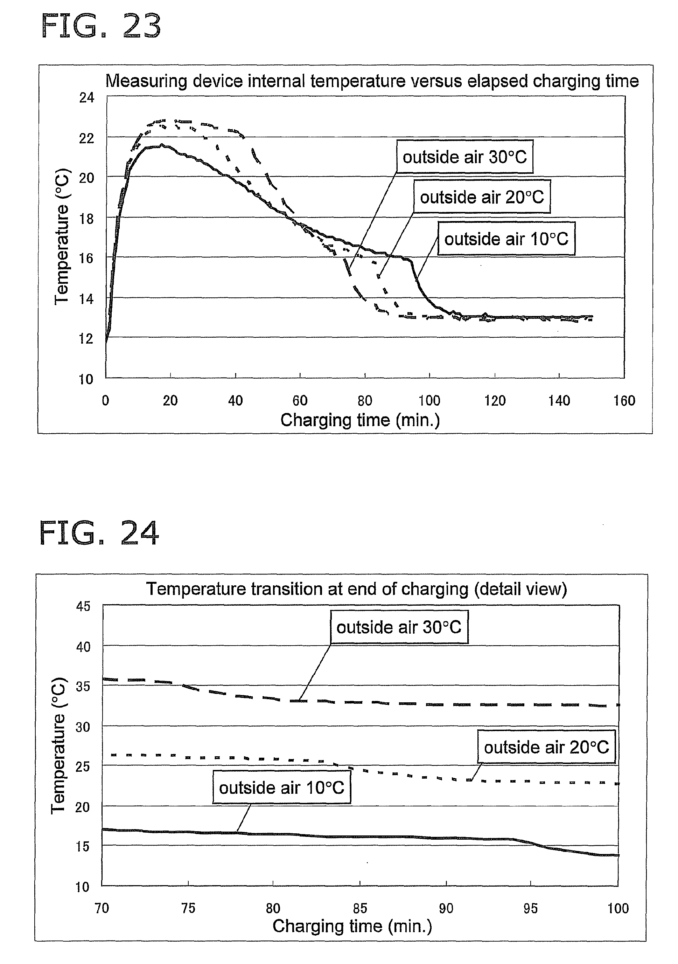

FIG. 23 shows the characteristic curves for outside air temperatures of 10°C, 20°C, and 30°C in FIG. 10 superimposed, using the graph for an outside air temperature of 10°C as a reference. As can be seen from this graph, the slopes of the three characteristic curves substantially coincide after a specific time (15 to 22 minutes) has elapsed since the start of charging. Thus, within this time period, in the external environment temperature correction step 07 (see FIG. 6 (a)), a shared temperature calculation table (environment temperature calculation table, environment temperature correction information) can be used regardless of the outside air temperature. That is, the process can be simplified by sharing the temperature calculation table within this range.

FIG. 24 is a graph detailing characteristic curves for outside air temperatures of 10°C, 20°C, and 30°C after the completion of charging in FIG. 10. As can be seen from this graph, although the charging completion time varies with the outside air temperature, after the end of charging, the characteristic curves corresponding to the various outside air temperatures substantially coincide. Thus, even after the end of charging, in the external environment temperature correction step 07, the shared temperature calculation table can be used regardless of the outside air temperature. That is, the process can be simplified by sharing the temperature calculation table within this range.

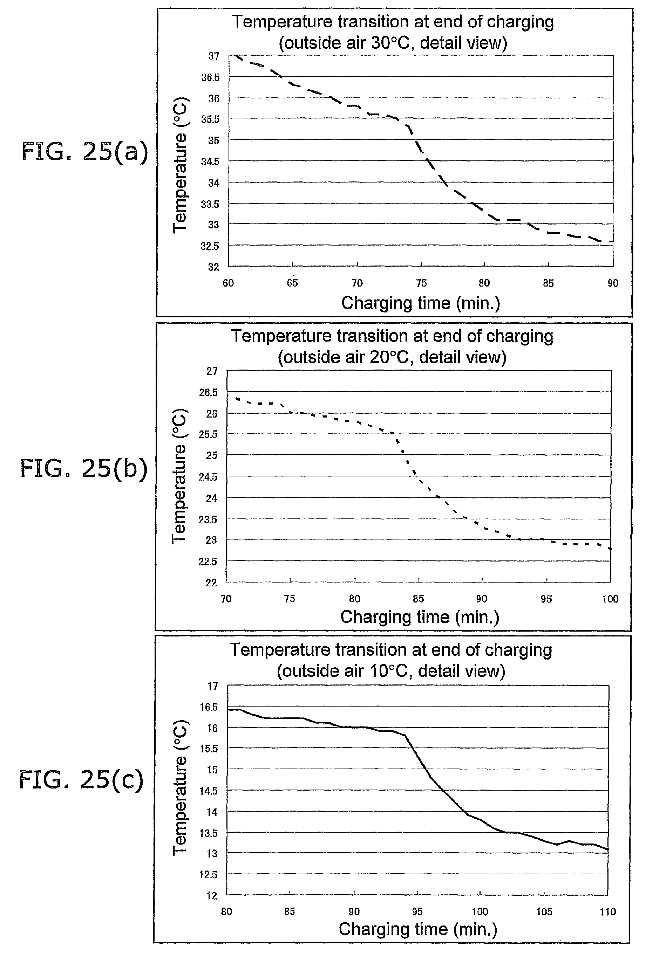

FIGS. 25 (a) to 25(c) are graphs detailing the characteristic curves for outside air temperatures of 10°C, 20°C, and 30°C before and after the end of charging in FIG. 10. As can be seen from these graphs, the proper table can be selected and the outside air temperature calculated, either during or after charging, by storing characteristic curves corresponding to various outside air temperatures ahead of time in the temperature calculation table (environment temperature correction information). That is, optimization is achieved by switching between the temperature calculation table during charging and the temperature calculation table after charging. As a matter of course, the shared temperature calculation table can be used after charging as previous described.

In the calculation of the outside air temperature by using the above-mentioned table for temperature correction, and measurement result of the thermistor (the environment temperature sensor 9) in the measuring device 2 is compared to the temperature data of the various tables, and if the difference is above a specific value, it may be determined that there is an error, and a notification sent to the display component 11 or the like. Consequently, when the outside air temperature is below 10°C, or is over 45°C, it can be determined that the environment temperature usage conditions for the measuring device 2 have not been met, and the user can be advised to halt usage.

Furthermore, in this embodiment, error can be evaluated from charging duration information and the internal environment temperature information at that time, by storing the temperature at the start of charging. For example, it can be seen that if the measurement result of the environment temperature sensor (thermistor) 9 at the start of charging is 23 degrees, and the deposition time (charging duration information) is 50 minutes, and the temperature of the environment temperature sensor 9 at that point is at least 35 degrees or less than 20 degrees, there will be a large discrepancy from the graph shown in FIG. 10. Accordingly, this result can be considered wrong, and it can be determined that there is an error. Naturally, in this case the decision may be made by measuring the temperature with the environment temperature sensor 9 once more.

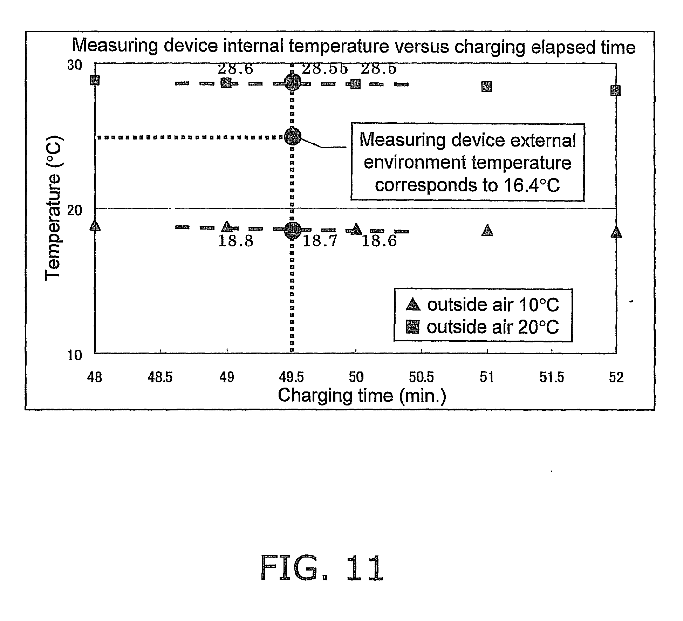

Next, the way to find the external environment temperature will be described in specific terms through reference to FIG. 11.

FIG. 11 shows the data for temperature between 48 and 52 minutes after the start of charging, in the data of FIG. 7. The temperature data is held at one-minute intervals. The deposition time here is 49.5 minutes after the start of charging, and we will describe how to calculate the environment temperature outside the measuring device 2 when the detected temperature at this point is 25°C. The temperature data is taken at one-minute intervals as mentioned above, and data after 49.5 minutes is not held. Therefore, the temperature is found by linear approximation from the closest data before and after 49.5 minutes.

Since the detected temperature is 25°C, the data of FIG. 7 should include an estimated environment temperature outside the measuring device 2 between outside air temperatures of 10°C and 20°C. The temperature data after 49 minutes at 10°C is 18.8°C, and the temperature data after 50 minutes is 18.6°C. Accordingly, the temperature after 49.5 minutes becomes 18.7°C by linear approximation. Similarly, the temperature after 49.5 minutes when the outside air temperature is 20°C is 28.55°C. The environment temperature outside the measuring device 2, when the detected temperature is 25°C 49.5 minutes after the start of charging, is calculated to be 16.4°C from the ratio between 28.55, 25, and 18.7.

Next, the flow of the step of temperature correction for the various correction categories using the environment temperature calculated in the "internal environment temperature correction step 06" or the "external environment temperature correction step 07" will be described through reference to FIG. 6 (b).

Examples of what is subjected to temperature correction with the environment temperature information (internal environment temperature, external environment temperature) includes the measurement object concentration information calculated in the specimen concentration measurement step 01 (see FIG. 6 (a)), as well as information about the various correction categories (see FIG. 6 (b)). Specifically, information about the concentration of the specimen sample (measurement object concentration information) is corrected according to environment temperature information (internal environment temperature, external environment temperature) by the computing means 10 (see FIG. 6 (a), the "internal environment temperature correction step 06" or the "external environment temperature correction step 07"), but correction for various correction categories is also performed at suitable times before and after this. Naturally, the accuracy of the information about the correction categories can be improved by performing temperature correction with environment temperature information or information about the environment temperature during heat generation (information about the environment temperature during charging) as shown in FIG. 6b, for whatever is affected by temperature.

This will be described in further detail. In the correction category temperature correction step 08, the various correction category information that has been measured is subjected to temperature correction with environment temperature information or information about the environment temperature during charging, and correction information for the various correction categories (correction category information) is determined. This correction information is a corrected value for the environment temperature at the time of specimen deposition, found from data for the corrected values at specific temperatures for the various correction categories stored ahead of time in the memory means 8. After this, the measurement object concentration information is corrected within the computing means 10 with correction category information found in the correction category temperature correction step 08. Then, finally, the specimen concentration (measurement object concentration) that has undergone various kinds of correction including for temperature is displayed on the display component 11.

In this embodiment, data for 10°C intervals (10°C, 20°C, and 30°C) is stored in the memory means 8, but the precision of the temperature calculation can be increased by storing temperature data in finer intervals (such as 1°C intervals).

Also, the environment temperature sensor 9 can be, for example, a thermistor, a temperature measuring resistor, an IC temperature sensor, a radiation thermometer, or the like.

As discussed above, with the measuring device 2 and the liquid sample measuring method pertaining to this embodiment, after the biosensor 1 has been mounted to the measuring device 2, and then blood has been deposited on the biosensor 1, the clock 19 and the environment temperature sensor 9 provided inside the measuring device 2 are used to measure the internal environment temperature at charging and the charging time of the secondary cell 21, and the external environment temperature at charging is identified.

Consequently, the environment temperature at charging is measured in real time to identify the environment temperature (external environment temperature), and various analysis objects such as the glucose concentration in blood deposited on the biosensor 1 can be corrected on the basis of this environment temperature (external environment temperature). Thus, the effect that the secondary cell 21 or other such heat generating material has in terms of raising the environment temperature can be eliminated, allowing the concentration of various analysis objects and so forth to be measured very accurately. As a result, in the measurement of glucose concentration, for example, the accuracy of temperature correction is improved, and an accurate measurement result can be obtained even during heat generation from the heat generating material. Also, an accurate measuring device 2 can be provided at a low cost without providing any new temperature sensor for measuring the temperature of the biosensor 1 itself.

Also, in this embodiment, measurement accuracy can be markedly improved by adding corrected values for glucose concentration, environment temperature, hematocrit value, interfering substances, and so forth, rather than just measurement time, as factors that change a method for measuring glucose concentration in blood deposited on the biosensor 1 to a more accurate method.

Also, with this embodiment, glucose was given as an example of the measurement object, but the present invention is not limited to this. For example, the same effect will be obtained with cholesterol, triglyceride, lactic acid, uric acid, bilirubin, alcohol, and other such biological samples, as well as environmental samples, food samples, and so forth.

Also, with this embodiment, the environment temperature sensor 9 is preferably disposed near the sensor holding section 3 or near the opening of the measuring device 2. However, if it is disposed on an electrical circuit substrate, for example, the effect of heat generation from the heat generating material will be propagated not only through the air, but also through the substrate. Accordingly, in this case variance in the substrate characteristics (such as substrate thickness, copper foil thickness, and insulator thickness) will result in greater error factors in the measurement data. Thus, if possible, it is best to provide the environment temperature sensor 9 inside the sensor holding section 3 and somewhere near the biosensor 1, where it will be less susceptible to the effect of heat conducted from the substrate.

Embodiment 2

Another embodiment of the present invention will now be described through reference to FIGS. 3, 9, 12, 13, and 14 to 22. The description here, just as in Embodiment 1 above, will be for a blood glucose sensor that measures glucose concentration using blood as the analysis object. What is described below through reference to the drawings is merely an embodiment of the present invention, and the present invention is not limited to or by this.

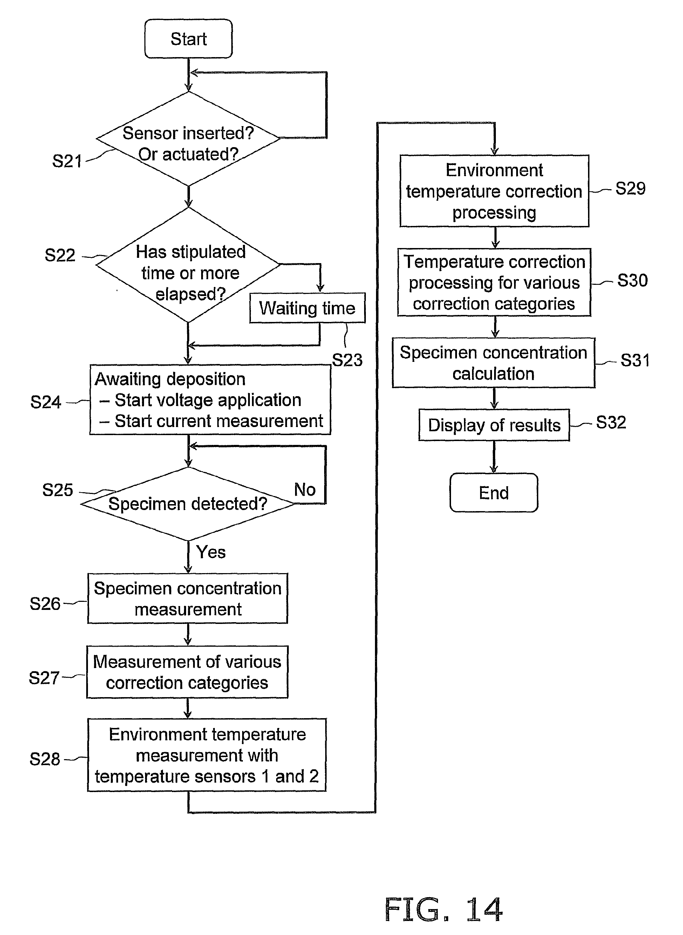

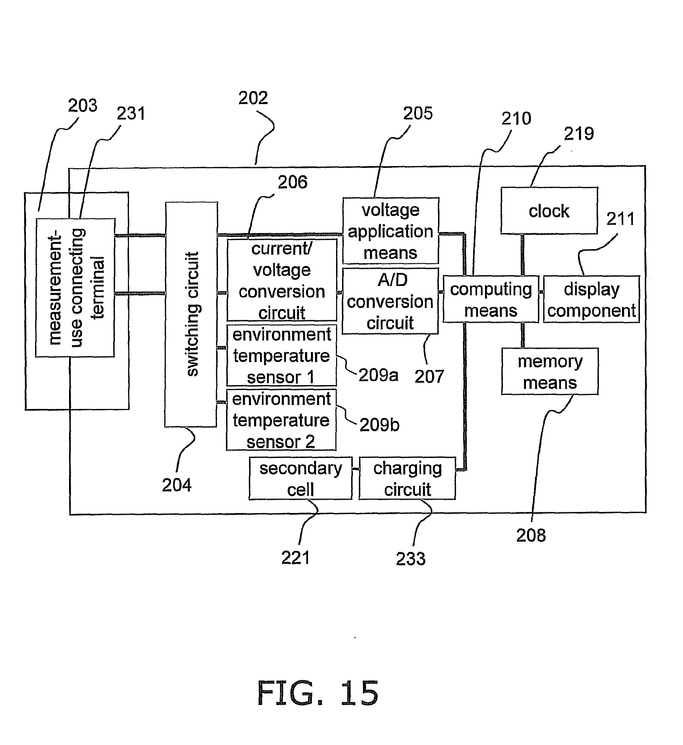

FIG. 14 is a flowchart of an overall algorithm for when a specimen concentration is calculated after a biosensor 201 pertaining to this embodiment has been mounted to a measuring device 202. FIG. 15 is a simplified diagram illustrating the measuring device 202 pertaining to this embodiment.

The biosensor 201, which is a constituent element of the measuring device 202 and method of this embodiment, will be described in detail. An exploded oblique view of the biosensor 201 is the same as FIG. 3 described in Embodiment 1 above, and will therefore not be described again here.

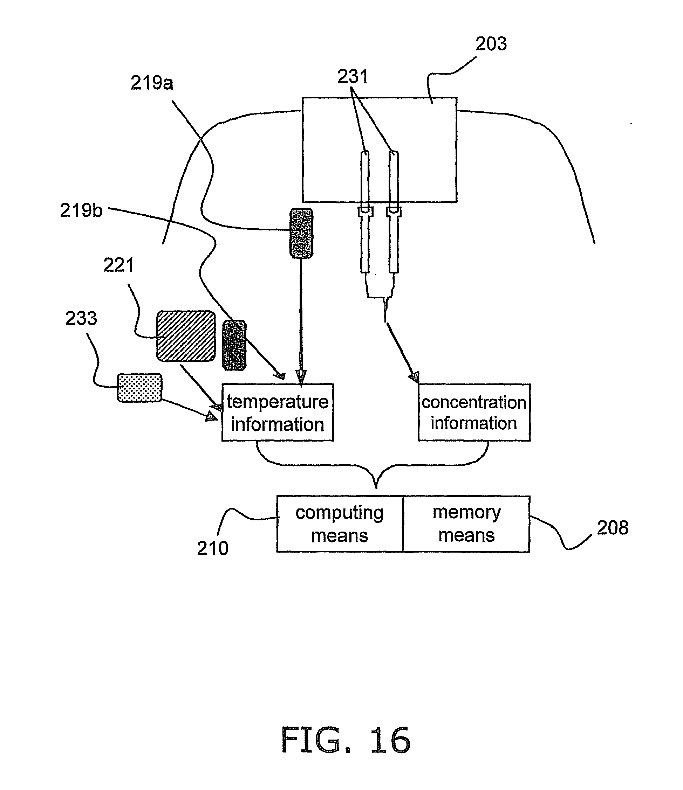

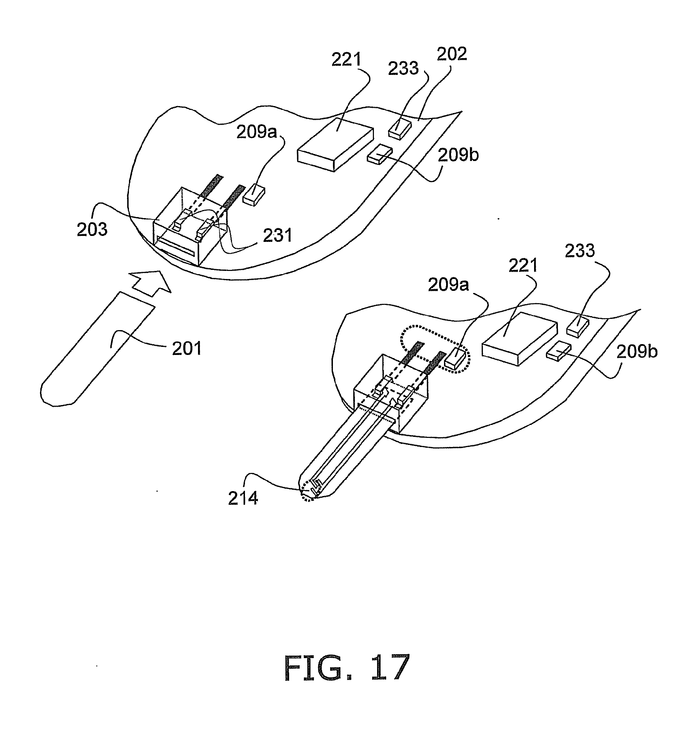

Next, the measuring device 202, which is a constituent element of this embodiment, will be described. FIG. 16 is a detail view of the main components at the portion where the biosensor 201 is mounted to the measuring device 202. FIG. 17 is an oblique view of the state before and after the biosensor 201 is mounted to a sensor holding section 203 that removably holds the biosensor 201.

As shown in FIGS. 15, 16, and 17, the measuring device 202 in this embodiment comprises the sensor holding section 203 that removably holds the biosensor 201, which is a constituent element of this embodiment. Measurement-use connecting terminals 231, which are connection terminals for forming corresponding electrical contacts along with an electrode system 214 on the biosensor 201, are disposed in the interior of the sensor holding section 203. In other words, the measurement-use connecting terminals 231 and the electrode system 214 on the biosensor 201 are disposed at positions where they come into contact with each other.

Each terminal (not shown) of the measurement-use connecting terminals 231 is in contact with an electrode for measuring the concentration of an analysis object or a detecting electrode for detecting that a specimen has been introduced into a cavity 17 (see FIG. 3), for example, and is further in contact with an electrode for measuring various correction categories. When voltage is applied between these electrodes, the electrode that applies the voltage in a switching circuit 204 is switched. The applied voltage is outputted from a voltage application means 205 made up of a DAC (digital to analog converter) or the like, and is applied between the specified electrodes.

The current obtained by electrochemical reaction (this is also called the response current) is converted into voltage by a current/voltage conversion circuit 206. The voltage value obtained here is converted into a digital signal by an A/D conversion circuit 207. Specimen concentration information is then computed by a computing means 210.

The correction categories referred to here include hematocrit value correction and correction for interfering substances, for example. Naturally, all of the correction categories with which electrochemical measurement is possible are included in these correction categories. Also, the specimen concentration is subjected to temperature correction during specimen concentration measurement, and tables for calculating various correction categories with respect to the environment temperature are stored ahead of time in a memory means 208, which consists of an EEP ROM (electrically erasable programmable read only memory), a flash memory, or the like. Temperature correction is performed during specimen concentration computation by using temperature information from a first environment temperature sensor 209a consisting of a thermistor or the like, and a second environment temperature sensor 209b. The specimen concentration that is ultimately found by the computing means 210 is displayed on a display component 211.

A rechargeable secondary cell 221 is installed in the measuring device 202, and a charging circuit 233 is provided for performing charging. The memory means 208 holds tables for calculating the above-mentioned correction categories, and also holds an environment temperature calculation table that is necessary when calculating the environment temperature outside the measuring device 202 during actual temperature correction from the environment temperature measured inside the measuring device 202 during charging. Also, a clock (operating time measurement component) 219 for keeping track of the date and time at which a concentration was measured, the charging duration (charging duration information), and so forth is also installed.

Next, the process of measuring a specimen concentration with the measuring device 202 pertaining to this embodiment will be described through reference to the flowchart in FIG. 14.

First, in step S21, the measuring device 202 is either in the midst of charging or is in a standby state in which it awaits a command from the user or awaits the insertion of the biosensor 201.

Next, when the measuring device 202 is actuated by user operation, or the biosensor 201 is inserted, in step S22 the measuring device 202 checks how much time has passed after the start of charging or after the end of charging, and if a stipulated amount of time has elapsed, the device enters a state of awaiting the deposition of a specimen.

If the stipulated amount of time has not elapsed, the flow goes through step S23, and after a preset waiting time has elapsed, the device enters a deposition waiting state in step S24.

Next, in step S24, if the device is in a specimen deposition waiting state, the connection of the electrode to which voltage is applied is set at the switching circuit 204 to apply voltage for deposition detection to the measurement-use connecting terminal 231, the application of voltage is begun, and the measurement of current is begun at the A/D conversion circuit 207.

Next, when the deposition of a specimen is detected in step S25, and in steps S26 and S27 the switching circuit 204 successively switches the electrode to which voltage will be applied and the applied voltage level to specified settings, and voltage is applied for measuring specimen concentration, various correction categories, and environment temperature.

Next, in step S28, the current flowing between specific electrodes of the biosensor 201, or to a thermistor (the environment temperature sensors 209a and 209b), is converted to voltage, and the environment temperature is measured.

Next, in step S29, the measuring device 202 performs correction processing of environment temperature after measurement of the measurement categories pertaining to calculation of the specimen concentration.

Next, in step S30, the environment temperature determined in step S29 is used to perform temperature correction processing for the various correction categories.

Next, in step S31, the specimen concentration is calculated on the basis of the above-mentioned corrected environment temperature and the various correction categories, and in step S32 the result is displayed on the display component 211.

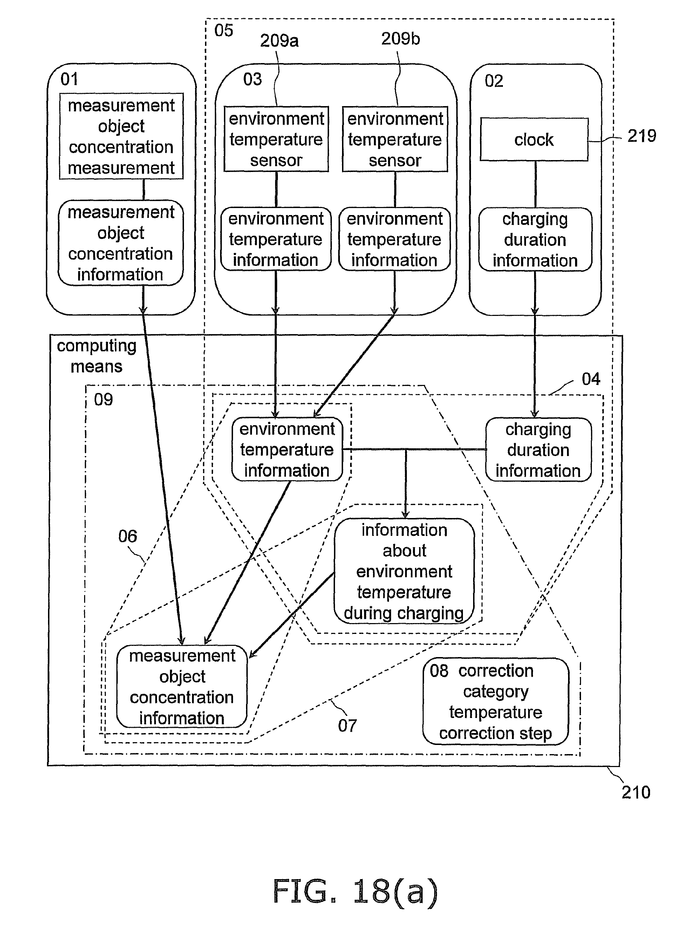

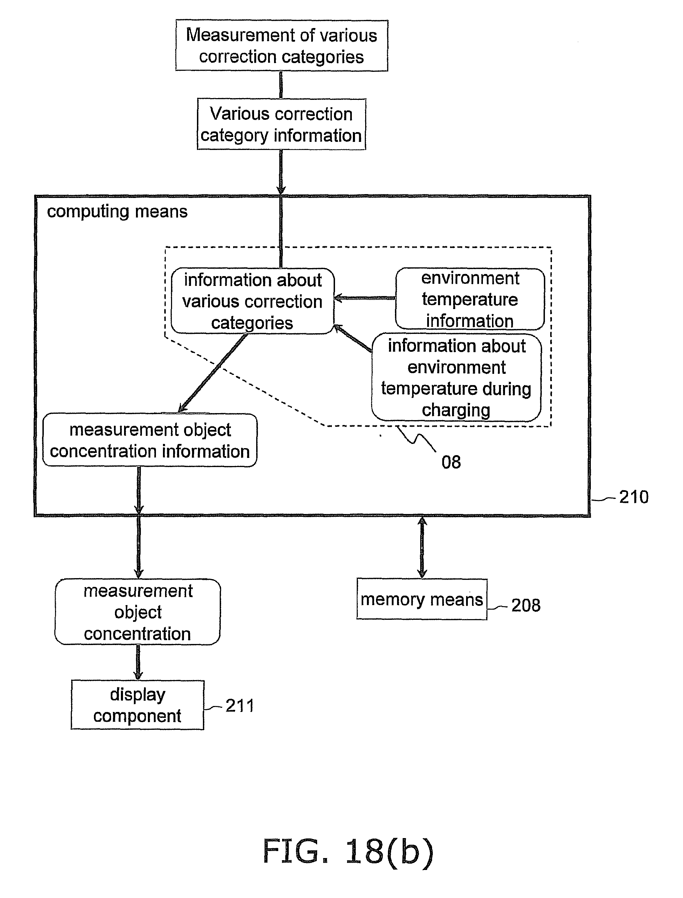

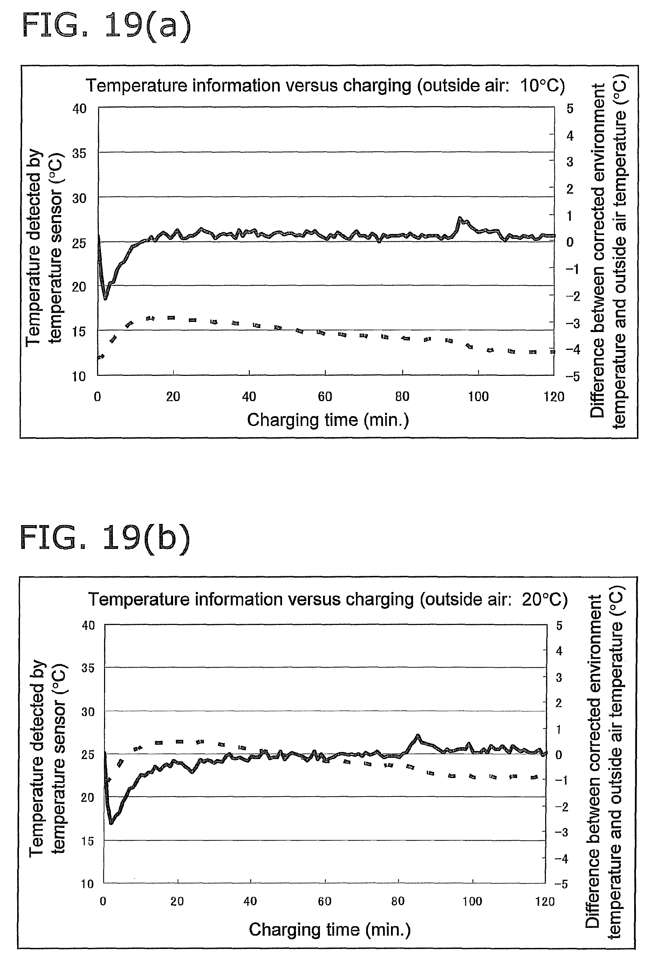

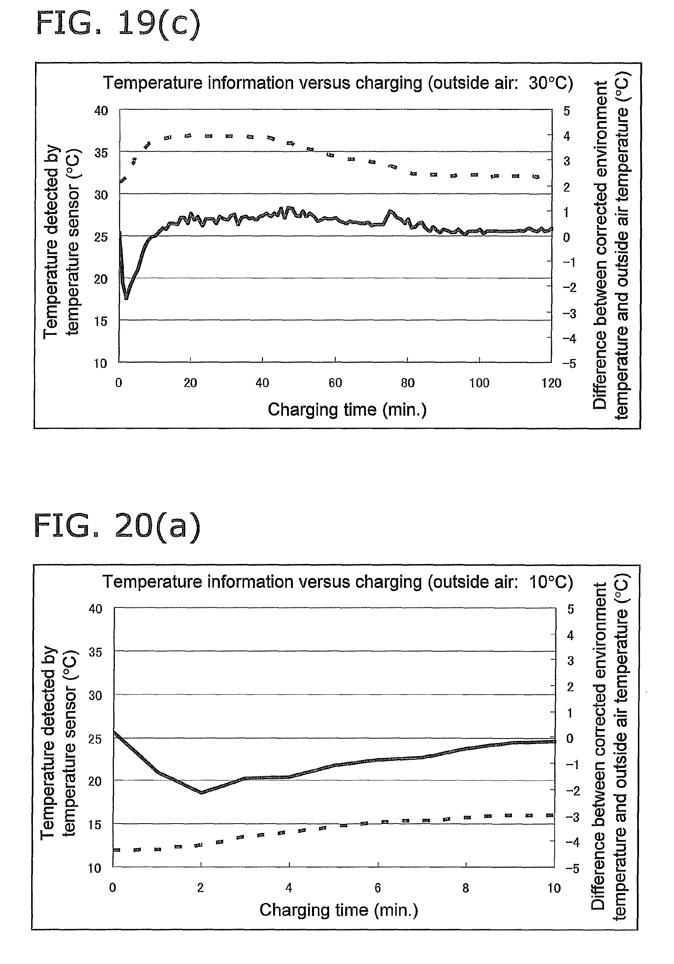

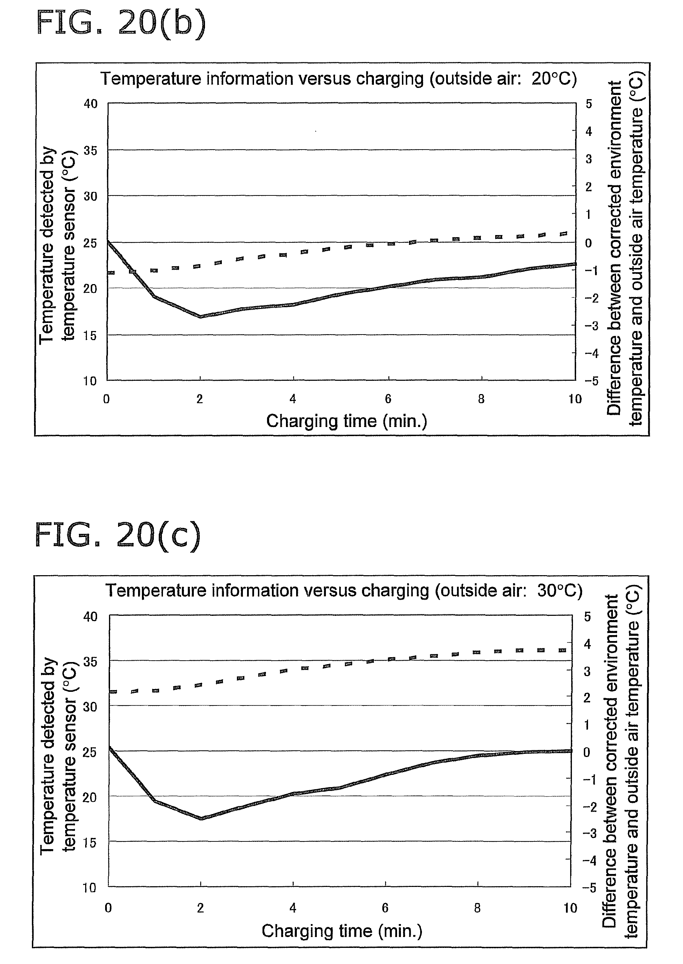

The correction processing for environment temperature will now be described through reference to FIGS. 18a, 18b, 19a to 19c, and 20a to 20c. FIGS. 18a and 18b show the flow in the step of calculating the temperature used in temperature correction for the various correction categories. FIGS. 19a, 19b, and 19c show data indicating the difference between the outside air temperature as actually measured and the calculated and corrected external environment temperature, and the temperature change of the environment temperature sensor 209a provided on the inside of the measuring device 202 versus elapsed charging time, in a state in which the environment temperature outside the measuring device is held at 10°C, 20°C, and 30°C, respectively. FIGS. 20a, 20b, and 20c are temperature change data showing a detail view of the portion up to 10 minutes after the start of charging in FIGS. 19a, 19b, and 19c.

If the temperature change outside the measuring device 202 is gradual, then immediately after the start of charging, the environment temperature measured inside the measuring device 202 will of course also be the same as the temperature outside the measuring device 202. However, once charging begins, a charging current of at least 400 mA flows to the battery itself and to the charging IC, capacitor, coil, resistor, or other such electrical parts used for controlling the charging. If we let P be the power (W), I be the current (A), and R be the resistance (Ω) here, then the power P found by

$$P = I \times I \times R$$

is consumed by the charging current and the resistance component had by each of the electrical parts, and heat is emitted from the electrical parts.

The charging of a secondary cell here is the same as in the graph shown in FIG. 9 in Embodiment 1 above, and so will not be described again.

Next, the flow of the environment temperature correction step will be described through reference to FIG. 18a.

First, when the measuring device 202 is actuated by user operation, or the biosensor 201 is inserted into the sensor holding section 203, in the charging duration measurement step 02 it is checked how many minutes have passed after the start of charging or after the end of charging.

In FIGS. 19a, 19b, and 19c and FIGS. 20a, 20b, and 20c, the temperature detected by the environment temperature sensors 209a and 209b is expressed by dotted lines, while the difference between the outside air temperature and the corrected environment temperature is expressed by solid lines. As can be seen from these graphs, after about 2 to 6 minutes have elapsed after the start of charging, the difference between the outside air temperature and the corrected environment temperature is so large (approximately 2 degrees or more) that accurate temperature correction is difficult. Thus, with the measuring device 202 of this embodiment, as shown in FIGS. 19a, 19b, and 19c, it is preferable if no specimen concentration measurement is performed during the 10 minutes after the start of charging. Here again, however, it is possible to perform accurate temperature correction by optimizing the calculation formula (discussed separately below), or a correction coefficient for the calculation formula, within the above-mentioned time range.

In the environment temperature measurement step 03, the environment temperature is measured at two places inside the measuring device 202 by the environment temperature sensor 209a provided near the sensor holding section 203 or near some other opening, and the environment temperature sensor 209b provided near the heat generating material.

In the step of measuring the environment temperature during heat generation 04, a corrected environment temperature corresponding to the outside air temperature is calculated from the temperature information measured at two places in the environment temperature measurement step 03, but it was discovered that this calculation can be performed using

Formula 1.

$$T = T1 - \alpha \times (T2 - T1) \; ... \; \text{Formula 1}$$

T: corrected environment temperature (°C)
T1: temperature detected by environment temperature sensor 209a (°C)
T2: temperature detected by environment temperature sensor 209b (°C)
$\alpha$: correction coefficient

The correction coefficient $\alpha$ is influenced by the external shape and the parts layout inside the measuring device 202, and this coefficient varies from model to model. The correction coefficient for measurement data in FIGS. 19a to 19c is 0.4.

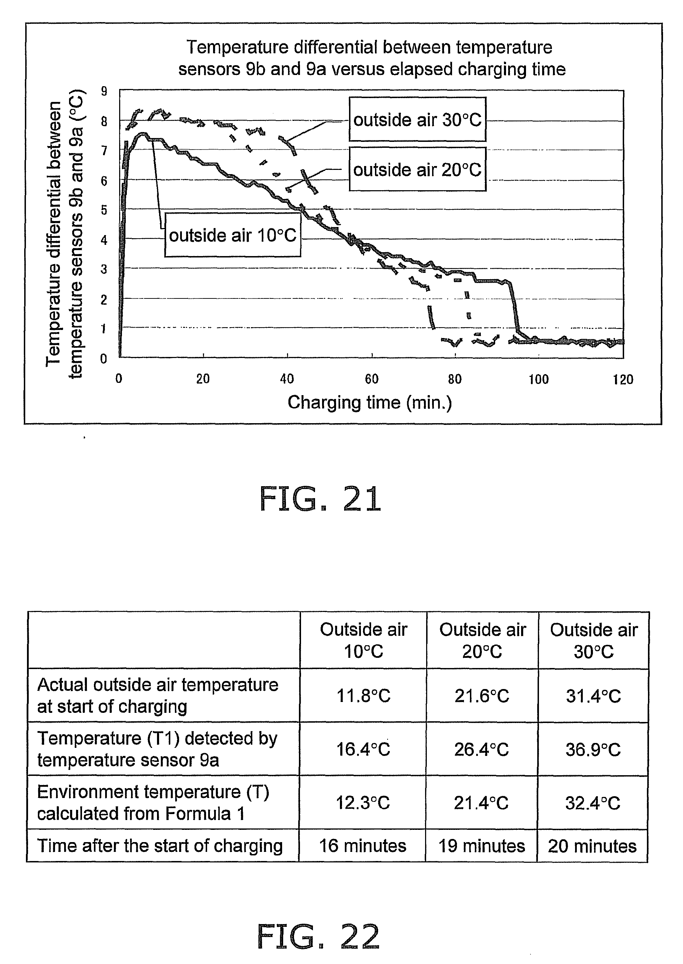

In FIGS. 19a, 19b, and 19c, it is clear that the temperature of the environment temperature sensor 209a disposed near the sensor holding section 203 can be calculated at an accuracy at which the difference between the outside air temperature and the environment temperature calculated with Formula 1 is $\pm1.5$°C, except for during the 10 minutes after the start of charging and during the 10 minutes after the end of charging, with respect to actual outside air temperatures of 10°C, 20°C, and 30°C. FIG. 22 shows various temperatures at the times when the difference between the temperature (T1) detected by the environment temperature sensor 209a and the actual outside air temperature is greatest. It is obvious that T1 is off by about 5°C for all outside air temperatures, whereas the difference between the environment temperature calculated with Formula 1 and the outside air temperature is no more than 1°C.

When the environment temperature corrected with Formula 1 is calculated, temperature correction of the specimen concentration is performed in the "external environment temperature correction step 07," and temperature correction of the various correction categories is similarly performed in the "correction category temperature correction step 08."

The flow of the step of temperature correction for the various correction categories using the environment temperature calculated in the "internal environment temperature correction step 06" or the "external environment temperature correction step 07" will now be described by using the Fig. 18(b).

Besides measurement object concentration information calculated in the specimen concentration measurement step 01, another example of what is subjected to temperature correction with the environment temperature information (internal environment temperature, external environment temperature) is various kinds of correction information (see FIG. 18b). Specifically, concentration information about the sample (measurement object concentration information) is subjected to correction by the computing means 210 according to the environment temperature information (internal environment temperature, external environment temperature) (the "internal environment temperature correction step 06" or the "external environment temperature correction step 07"), but correction is also performed for various correction categories at suitable times before and after this. Naturally, the accuracy of the information about the correction categories can be further improved by performing temperature correction with environment temperature information or information about the environment temperature during heat generation (information about the environment temperature during charging) as shown in FIG. 18b, for whatever is affected by temperature.

To describe this in further detail, in the correction category temperature correction step 08, the measured correction category information is subjected to environment temperature with environment temperature information and information about the environment temperature during charging, and correction information for the various correction categories (correction category information) is determined. This correction information is a corrected value at the environment temperature during specimen deposition, found from the environment temperature calculated by the above method (internal environment temperature, external environment temperature) and data for the corrected value at a specific temperature for correction categories stored ahead of time in the memory means 208. After this, the measurement object concentration information is corrected in the computing means 210 with the correction category information found in the correction category temperature correction step 08, and the sample concentration that has undergone various corrections, including for temperature, is finally displayed on the display component 211.

The environment temperature sensors 209a and 209b can be, for example, a thermistor, a temperature measuring resistor, an IC temperature sensor, a radiation thermometer, or the like.

As discussed above, with the measuring device 202 and the liquid sample measuring method pertaining to this embodiment, after the biosensor 201 has been mounted to the measuring device 202, and then blood has been deposited on the biosensor 201, the environment temperature during charging and the charging duration of the secondary cell 221 are measured by the environment temperature sensors 209a and 209b and the secondary cell 221 provided in the measuring device 202. The environment temperature during charging is then identified, thereby identifying the environment temperature (external environment temperature) by measuring the environment temperature during charging in real time. Furthermore, various analysis objects such as the glucose concentration in blood deposited on the biosensor 201 can be corrected on the basis of this environment temperature (external environment temperature).

Consequently, the effect of a rise in the internal environment temperature inside the housing caused by heat generation from the heat generating material (such as the secondary cell 221) can be canceled out. As a result, it is obvious that accuracy is higher in temperature correction of the glucose concentration, and a very accurate measurement result is obtained even when heat is being generated from the heat generating material. Also, an accurate measuring device 202 can be provided at a low cost without providing any new temperature sensor for measuring the temperature of the biosensor 201 itself.

Also, in this embodiment, just as in Embodiment 1, measurement accuracy can be markedly improved by adding corrected values for glucose concentration, environment temperature, hematocrit value, interfering substances, and so forth, rather than just measurement time, as factors that change a method for measuring glucose concentration in blood deposited on the biosensor 201.

Also, with this embodiment, just as in Embodiment 1, glucose was given as an example of the measurement object, but the present invention is not limited to this. For example, the same effect will be obtained with cholesterol, triglyceride, lactic acid, uric acid, bilirubin, alcohol, and other such biological samples, as well as environmental samples, food samples, and so forth.

Also, with this embodiment, the environment temperature in the measuring device 202 was measured at two places, and the environment temperature outside the measuring device 202 was calculated based on the temperature differential between these. Accordingly, the places where the temperature sensors are installed are preferably distinctive places each having a different temperature change. In this embodiment, the place where the environment temperature sensor 209a was installed was near the sensor holding section 203 or near an opening, which are susceptible to the effect of outside air. The place where the environment temperature sensor 209b was installed was near the secondary cell (heat generating material) 221, which is a factor that affects heat generation with respect to the environment temperature sensor 209b.

FIG. 21 shows the transition in the temperature differential between the environment temperature sensors 209a and 209b with respect to the elapsed charging duration in this embodiment. This is a graph of the states when the outside air temperature is held constant at 10°C, 20°C, or 30°C, and it can be seen that the temperature differential in the various charging modes is substantially the same even when the outside air temperature varies.

More specifically, the temperature differential in constant current mode is 7 to 8°C, the temperature differential at the end of charging is about 2.5°C, and the temperature differential 100 minutes after the end of charging is less than 1°C. In other words, since the charging modes can be detected by the measuring device itself, it is possible to confirm whether or not the environment temperature sensors 209a and 209b are functioning properly by checking the temperature differential in the charging mode, regardless of the outside air temperature. Furthermore, it was found that even if the charging circuit 233 should malfunction and the secondary cell 221 should generate an abnormal amount of heat, it is still possible to detect the environment temperature (external environment temperature) by calculating the above-mentioned temperature differential.

Also, in this embodiment, as discussed above, the environment temperature sensor 209a is preferably disposed near the sensor holding section 203 or near the opening. However, if it is disposed on an electrical circuit substrate, the effect of heat generation from the heat generating material (such as the secondary cell 221) will be propagated not only through the air, but also through the substrate. Accordingly, in this case variance in the substrate characteristics (such as substrate thickness, copper foil thickness, and insulator thickness) will result in greater error factors in the measurement data. Thus, if possible, it is best to provide the environment temperature sensors 209a and 209b inside the sensor holding section 203 and somewhere near the biosensor 201, where it will be less susceptible to the effect of heat conducted from the substrate.

Also, in this embodiment, it became obvious that using Formula 1 makes it possible to calculate the corrected environment temperature outside the time range of within 10 minutes after the start of charging and within 10 minutes after the end of charging. As can be seen from this Formula 1, when T1 and T2 are equal, that is, when no heat is being generated from the heat generating material, the second term on the right side in Formula 1 is zero, giving the relation T = T1, and it was discovered that the temperature detected by the environment temperature sensor 209a disposed near the opening directly becomes the outside air temperature (external environment temperature). Since the temperature detected by the environment temperature sensors 209a and 209b rises under the effect of heat generation by the heat generating material, the second term portion $\{\alpha \times (T2 - T2)\}$ on the right side of Formula 1 expresses the product of multiplying a coefficient $\alpha$ that affects the internal structure of the device model by the temperature (T2 - T1) that affects the opening from the heat generating material. Thus, Formula 1 is based on the idea that the outside air temperature can be calculated by subtracting $\alpha \times$ (T2 - T1) from the temperature T1 affected by heat generation. Thus, as long as it is based on the same idea, the calculation formula is not necessarily limited to Formula 1.

Also, in this embodiment, it is obvious that using Formula 1 makes it possible to calculate the corrected environment temperature outside the time range of within 10 minutes after the start of charging and within 10 minutes after the end of charging. However, this is because the temperature change of the heat generating material is gentle, and the temperature change detected by the environment temperature sensor 209a conforms to the temperature change detected by the environment temperature sensor 209b. Nevertheless, within the time range of within 10 minutes after the start of charging and within 10 minutes after the end of charging, the temperature change of the heat generating material is sudden, and the temperature change detected by the environment temperature sensor 209a does not conform to the temperature change detected by the environment temperature sensor 209b. Accordingly, it is somewhat difficult to calculate with Formula 1 as it stands. Thus, when a pronounced temperature change of the heat generating material occurs, it is possible to calculate the corrected environment temperature by using a different calculation formula.

Furthermore, regarding the above-mentioned Formula 1, as discussed above, correction accuracy decreases from immediately after the start of charging until 10 minutes later, but the environment temperature T can be calculated accurately by employing a Formula 2 that makes use of a correction value $\beta$ as shown below, according to the amount of time that has elapsed since the start of charging.

$$T = T1 - \alpha \times (T2 - T1) + \beta \text{ ... Formula 2}$$

$\beta$: correction coefficient

For example, within a range of 0 to 10 minutes after the start of charging, an error of about 2°C occurs, so the environment temperature T may be calculated using the correction coefficient $\beta$ ($\approx$ 2°C).

Also, the range of 0 to 10 minutes after the start of charging may be divided into two parts consisting of 0 to 2 minutes and 2 to 10 minutes, and the environment temperature T calculated using the following Formulas 3 and 4.

$$T = T1 - \alpha \times (T2 - T1) + \gamma \text{ ... Formula 3}$$

$$T = T1 - \alpha \times (T2 - T1) + \delta \text{ ... Formula 4}$$

$\gamma$ and $\delta$: correction coefficients

In this way, as shown in FIGS. 19a to 19c and FIGS. 20a and 20c, accuracy can be further improved in the calculation of the environment temperature T within the range of 0 to 10 minutes after the start of charging.

Estimating the Charging End Time

It has been known in the past that the charging time of a rechargeable cell (secondary cell) serving as a charging component installed in the above-mentioned measuring device 2 varies with the remaining cell charge and the charging method (the magnitude of the charging current value).

Therefore, the estimated charging completion time was calculated on the basis of the above-mentioned remaining cell charge and charging method, but there is a discrepancy with the actual charging completion time, so this method has only been used as a general yardstick.

In this embodiment, to the above-mentioned two elements (remaining cell charge and charging method (charging current)) are added two more elements, environment temperature data and the operating time since the start of charging, so the charging completion time is estimated on the basis of a total of four parameters.

We now know that the charging time various with the environment temperature, and taking this element into account will further improve the accuracy of estimating the charging completion time.

More specifically, as shown in FIG. 2, the secondary cell 21 (an example of a heat generating material), the charging circuit 33, the computing means (remaining cell charge measurement component) 10, and the display component 11 are installed in the measuring device 2. The charging circuit 33 charges the secondary cell 21. The computing means 10 finds the remaining charge of the secondary cell 21 via the charging circuit 33. The display component 11 displays various measurement information and statuses and the clock 19 for measuring the date and time at which a concentration was measured, the charging duration, and so forth.

As mentioned above, how long it takes from the start of charging until its completion varies greatly with the remaining charge of the secondary cell 21 and the charging method employed by the charging circuit 33. When a fast charge is performed with the charging circuit 33, the charging current can be raised so that the cell is charged in a shorter time, but with an ordinary charge, the charging current is lowered slightly so that it takes more time. This is because performing a fast charge accelerates the deterioration of the secondary cell 21 and shortens its service life. Also, the charging current here need not be constant (see FIG. 9 and its explanatory portion above).

A nickel-hydrogen cell, a lithium ion cell, or the like is used for the secondary cell 21 here.

FIG. 23 shows measurement data indicating the temperature change inside the measuring device 2 at different charging durations, in a state in which the external environment temperature of the measuring device 2 is held constant at 10°C, 20°C, or 30°C. Naturally, the charging conditions and charging method here are set to be the same in each case. That is, the remaining charge of the secondary cell 21 is set to zero, and the charging current and other such aspects of the charging method are the same.

As can be seen from FIG. 23, under charging conditions that are thus the same, the charging completion time is shortest, at approximately 74 minutes from the start of charging (see FIG. 25a), when the external environment temperature is 30 degrees, and the charging completion time is longest, at approximately 94 minutes from the start of charging (see FIG. 25c), when the external environment temperature is 10 degrees.

Therefore, the measuring device 2, which has a charging function, can find the charging completion time using the remaining charge of the secondary cell 21, the charging current, the charging duration, and the external environment temperature as parameters, allowing a more accurate to be made.

Consequently, the user can be notified of the accurate charging completion time, or how much time remains until charging completion. This allows the user to check the remaining time and use his or her time more effectively.

Also, notification of the estimated time until charging completion may be made by a method in which the display component 11 provided to the measuring device 2 is used to display the remaining time until charging completion, or a method in which voice or vibration is used for people of impaired vision.

As discussed above, with the measuring device 2 in this embodiment, the charging completion time can be found, and a more accurate estimate made, by using remaining charge of the secondary cell 21, the charging current, the charging duration, and the external environment temperature as parameters. Thus, the measuring device 2 can be utilized, for example, as a measuring device having a charging function and having a function of measuring the environment temperature because it is provided with a temperature sensor in the housing. This is particularly useful in the field of compact, portable medical devices that utilize a calculated charging time.

Embodiment 3

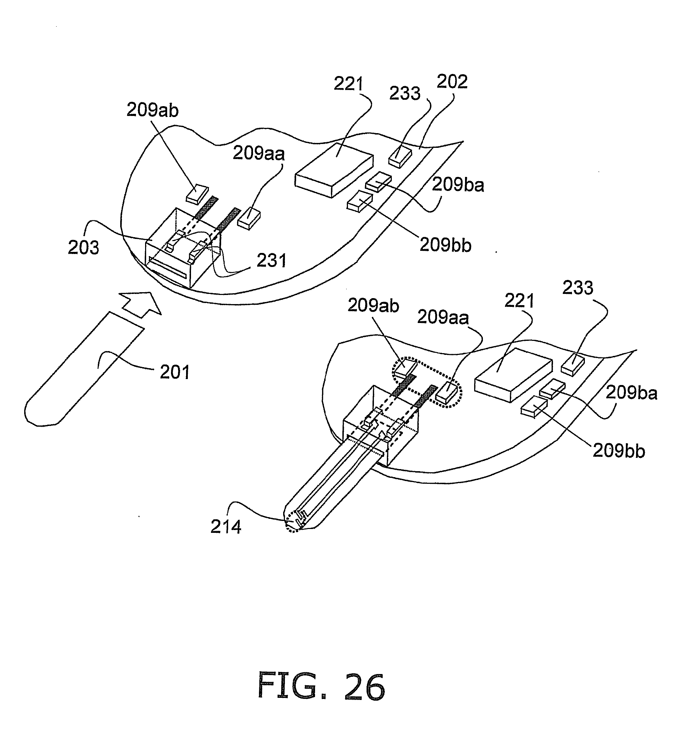

The measuring device pertaining to yet another embodiment of the present invention will now be described through reference to FIG. 26.

In Embodiments 1 and 2 above, the external environment temperature outside the housing was calculated on the basis of information measured by such as the environment temperature sensor (thermistor) 9 provided to the measuring device 2. However, if the environment temperature sensor 9, etc., should not operate properly for one reason or another, then the external environment temperature cannot be calculated accurately. As a result, the concentration of the specific component in a liquid sample, which has been corrected on the basis of this external environment temperature information, cannot be found accurately, and there is a risk that the measurement accuracy of the measuring device 2 will be poor.

To solve this problem, in this embodiment the constitution shown in FIG. 26 is employed. Those constituent elements that are in common with Embodiments 1 and 2 above are numbered the same and will not be described again.

In Embodiment 2 above, the environment temperature sensors 209a and 209b provided inside the housing were provided such that one was at a position near the heat generating material (first region) and the other was at a different position that was not near the heat generating material (second region). In contrast, this embodiment differs from Embodiment 2 in that a plurality of environment temperature sensors 209aa and 209ab, and 209ba and 209bb, are provided in each of the first and second regions.

The result of providing the plurality of environment temperature sensors 209aa and 209ab, and 209ba and 209bb, in each of the first and second regions is that in the first region, for example, the difference is found between the detection results for the internal environment temperature information measured by the plurality of environment temperature sensors 209ba and 209bb provided in the first region. Whether or not the environment temperature sensors 209ba and 209bb are operating properly can be determined from whether or not the temperature difference thus found exceeds a specific range.

Similarly, in the second region, the difference is found between the detection results for the internal environment temperature information measured by the plurality of environment temperature sensors 209aa and 209ab provided in the second region. Whether or not the environment temperature sensors 209aa and 209ab are operating properly can be determined from whether or not the temperature difference thus found exceeds a specific range.

That is, whether or not the environment temperature sensors are operating properly can be determined in advance, at a stage prior to performing correction of the measurement object concentration information for temperature correction-use temperature (the internal environment temperature correction step 06 or the external environment temperature correction step 07).

By thus providing the plurality of environment temperature sensors 209aa and 209ab, and 209ba and 209bb, in each of the first and second regions, and finding the difference between the internal environment temperature information measured by the environment temperature sensors 209aa and 209ab, and 209ba and 209bb, the drop in measurement accuracy that would otherwise occur if the environment temperature sensors 209aa and 209ab, and 209ba and 209bb, provided in the respective regions do not operate properly can be prevented from happening.

In this case, it is determined whether or not either the difference in internal environment temperature information measured by the plurality of environment temperature sensors 209ba and 209bb provided in the first region, or the difference in internal environment temperature information measured by the environment temperature sensors 209aa and 209ab provided in the second region, exceeds a specific range (determination step), and if the difference in temperature does exceed the specific range, an error notification component such as the above-mentioned display component 211 performs error display (notification) (error notification step).

Also, when the concentration of a specific component of a liquid sample is not to be measured, or before the start of measurement, if the internal environment temperature information of the plurality of environment temperature sensors in the first and second regions is measured, the environment temperature sensors monitor each other using temperature differential data between the environment temperature sensors, and also monitor changes in this temperature differential data, then it will also be possible to predict malfunction of the environment temperature sensor, so a measuring device of higher reliability can be provided.

INDUSTRIAL APPLICABILITY

With the present invention, the environment temperature outside a housing can be easily calculated while factoring in the effect of a rise in temperature during heat generation by a heat generating material provided inside the housing. Thus, it is possible to utilize the present invention in measuring devices and so forth that measure an environment temperature with a temperature sensor provided inside a housing. The present invention is also useful in fields such as compact medical-use diagnostic devices, analyzers, and so forth that need to produce accurate measurement results by correcting the calculated value for concentration of a specific component in a liquid sample on the basis of the environment temperature.

**Claims**

1. An environment temperature measuring method for measuring the temperature with a measuring device provided with a heat generating material and an environment temperature sensor inside a housing, on the basis of electrical information measured by the environment temperature sensor, said method comprising:

   a heat generation operating time measuring step of measuring the operating time during heat generation by a heat generating material provided inside the housing; and
   an external environment temperature calculation step of calculating the external environment temperature outside the housing on the basis of the operating time of the heat generating material and an internal environment temperature obtained at the environment temperature sensor.

2. The environment temperature measuring method according to Claim 1,
wherein, in the external environment temperature calculation step, the external environment temperature outside the housing is calculated on the basis of an environment temperature calculation table stored in a memory device provided inside the housing.

3. The environment temperature measuring method according to Claim 1 or 2,
wherein, in the external environment temperature calculation step, the external environment temperature outside the housing is calculated on the basis of the operating time of the heat generating material and the difference between a plurality of detection results for internal environment temperature information at a plurality of environment temperature sensors provided inside the housing.

4. The environment temperature measuring method according to any of Claims 1 to 3,
further comprising a correction step of performing temperature correction for various correction categories by using the external environment temperature calculated in the external environment temperature calculation step.

5. The environment temperature measuring method according to Claim 1 or 2,
wherein the heat generating material is one or more of a secondary cell, a battery, a charger, a charging IC, a coil (inductor), and a resistor.

6. The environment temperature measuring method according to Claim 5,
wherein the external environment temperature calculation step involves calculating the external environment temperature on the basis of the internal environment temperature information and the operating time of the secondary cell measured in the heat generation operating time measurement step, regardless of whether or not charging is in progress.

7. The environment temperature measuring method according to Claim 6,
wherein, in the external environment temperature calculation step, an appropriate selection is made from a plurality of the specific environment temperature calculation tables and the external environment temperature is calculated, either during or after charging.

8. The environment temperature measuring method according to any of Claims 5 to 7, further comprising:

a determination step of determining whether or not the difference between the internal environment temperature measurement information measured by the environment temperature sensor and the temperature data included in the environment temperature calculation table exceeds a specific range; and
an error notification step of judging an error to have occurred and notifying to that effect when it is determined in the determination step that the specific range has been exceeded.

9. The environment temperature measuring method according to any of Claims 5 to 8,
wherein, in the external environment temperature calculation step, after the completion of charging, shared information from the environment temperature calculation table is used.

10. The environment temperature measuring method according to any of Claims 5 to 9,
wherein, in the external environment temperature calculation step, during a time period from right after the start of charging until a specific length of time has elapsed, shared information from the environment temperature calculation table is used.

11. The environment temperature measuring method according to Claim 3 or 4,
wherein the heat generating material is one or more of a secondary cell, a battery, a charger, a charging IC, a coil (inductor), and a resistor.

12. The environment temperature measuring method according to Claim 11,
wherein the external environment temperature calculation step involves calculating the external environment temperature on the basis of the operating time of the secondary cell measured in the heat generation operating time measurement step and the measurement results of a plurality of the environment temperature sensors installed in the measuring device, regardless of whether or not charging is in progress.

13. The environment temperature measuring method according to Claim 12,

wherein, in the external environment temperature calculation step, an appropriate selection is made from a plurality of environment temperature calculation tables and the external environment temperature is calculated, either during or after charging.

14. The environment temperature measuring method according to Claim 12 or 13, further comprising:

   a determination step of determining whether or not the difference between the measurement results of the plurality of environment temperature sensors exceeds a specific range; and
   an error notification step of judging an error to have occurred and notifying to that effect when it is determined in the determination step that the specific range has been exceeded.

15. A liquid sample measuring method, in which the concentration of a specific component in a liquid sample deposited on a biosensor mounted in a measuring device provided with a heat generating material and an environment temperature sensor inside a housing is measured, said method comprising:

   a specimen concentration measurement step of measuring the concentration of the specific component in the liquid sample deposited on the biosensor; and
   an external environment temperature correction step of correcting the concentration of the specific component on the basis of the external environment temperature outside the housing as found by the environment temperature measuring method according to any of Claims 1 to 14.

16. The liquid sample measuring method according to Claim 15,
   wherein the external environment temperature calculation step includes an internal environment temperature measurement step of measuring the internal environment temperature inside the housing with an environment temperature sensor that is provided near a biosensor holding section provided in the housing and to which the biosensor can be removably attached, or near an opening in the measuring device.

17. The liquid sample measuring method according to Claim 15,
   wherein the external environment temperature calculation step includes an internal environment temperature measurement step of measuring the internal environment temperature inside the housing with an environment temperature sensor that is mounted in a biosensor holding section provided in the housing and to which the biosensor can be removably attached, and that is provided near an electrode terminal on the biosensor.

18. The liquid sample measuring method according to any of Claims 15 to 17,
   wherein, if the specimen concentration measurement step is started during the heat generation operating time measurement step, then the heat generation operating time measurement step is carried out in parallel with the specimen concentration measurement step.

19. The liquid sample measuring method according to any of Claims 15 to 17,
   wherein, if the specimen concentration measurement step is started during the heat generation operating time measurement step, then the heat generation operating time measurement step is carried out in parallel with the specimen concentration measurement step only for a predetermined length of time from the start of measurement of the heat generation operating time.

20. The liquid sample measuring method according to any of Claims 15 to 19,
   wherein the external environment temperature correction step includes an internal environment temperature correction step of correcting the concentration of a specific component in the liquid sample deposited on the biosensor, on the basis of the internal environment temperature inside the housing as measured in the internal environment temperature measurement step.

21. The liquid sample measuring method according to any of Claims 15 to 20,
   wherein the external environment temperature correction step includes a correction category temperature correction step of correcting various correction categories other than the temperature at which the concentration of a specific component in the liquid sample is corrected as obtained in the specimen concentration measurement step, on the basis of information about the internal environment temperature inside the housing measured by the environment temperature sensor, or information about the environment temperature outside the housing as calculated in the external environment temperature calculation step.

**22.** The liquid sample measuring method according to any of Claims 15 to 21,
wherein, in the external environment temperature calculation step, a correction is performed when the difference between the values of the internal environment temperature information and the external environment temperature information exceeds a specific threshold.

**23.** The liquid sample measuring method according to any of Claims 15 to 22,
wherein, in the external environment temperature calculation step, the internal environment temperature inside the housing is corrected after detecting that the liquid sample has been deposited on the biosensor, on the basis of the charging operating time information calculated in the heat generation operating time measurement step.

**24.** The liquid sample measuring method according to any of Claims 15 to 23,
wherein, in the external environment temperature correction step, the optimal environment temperature calculation table, according to the operating time during heat generation of the heat generating material, is selected from among the plurality of environment temperature calculation tables stored in the memory device provided to the measuring device, and the concentration of a specific component in the liquid sample is corrected.

**25.** The liquid sample measuring method according to Claim 21,
wherein, in the correction category temperature correction step, a plurality of the environment temperature calculation tables stored in the memory device provided to the measuring device are selected according to the charging operating time information during heat generation of the heat generating material, and temperature correction is also performed for various correction categories other than temperature that are performed before and after the temperature correction of the specific component concentration.

**26.** A measuring device, comprising:

a housing;
a heat generating material provided inside the housing;
an environment temperature sensor provided inside the housing, configured to measure the internal environment temperature inside the housing;
an operating time measurement component configured to measure the operating time of the heat generating material; and
a computer configured to compute external environment temperature information for the outside of the housing, on the basis of the internal environment temperature and the operating time during heat generation of the heat generating material.

**27.** A measuring device equipped with a biosensor, configured to measure the concentration of a specific component deposited on the biosensor, said measuring device comprising:

a housing;
a heat generating material provided inside the housing;
an environment temperature sensor provided inside the housing, configured to measure the internal environment temperature inside the housing;
a measurement-use connection terminal configured to take off signals required for analysis from a measurement-use electrode on the biosensor side;
a biosensor holding section formed integrally with respect to the housing, configured to hold the biosensor in a removable state;
an operating time measurement component configured to measure the operating time of the heat generating material; and
a computer configured to compute external environment temperature for the outside of the housing, on the basis of the internal environment temperature measured at the environment temperature sensor and the operating time measured at the operating time measurement component.

**28.** The measuring device according to Claim 26 or 27,
wherein a plurality of the environment temperature sensors are provided inside the housing, and the computer calculates the external environment temperature on the basis of the operating time during heat generation of the heat generating material, and a plurality of internal environment temperatures measured at the plurality of environment temperature sensors.

**29.** The measuring device according to any of Claims 26 to 28,
wherein the environment temperature sensor is disposed inside the biosensor holding section.

**30.** The measuring device according to any of Claims 26 to 28,
wherein the environment temperature sensor is at least provided near the opening of the biosensor holding section.

**31.** The measuring device according to any of Claims 26 to 30,
wherein at least one of the plurality of environment temperature sensors is provided near the heat generating material.

**32.** The measuring device according to any of Claims 26 to 31,
wherein the computer further performs correction for various correction categories other than the temperature at which the concentration of a specific component in the liquid sample deposited on the biosensor is corrected, on the basis of the external environment temperature outside the measuring device.

**33.** The measuring device according to any of Claims 26 to 32,
further comprising a memory device configured to store a plurality of environment temperature calculation tables for computing the external environment temperature outside the housing, on the basis of the operating time and the internal environment temperature.

**34.** The measuring device according to Claim 26 or 27,
wherein the heat generating material is one or more of a secondary cell, a battery, a charger, a charging IC, a coil (inductor), and a resistor.

**35.** The measuring device according to Claim 34,
wherein the computer calculates the external environment temperature on the basis of the internal environment temperature and the operating time of the secondary cell measured by the operating time measurement component, regardless of whether or not charging is in progress.

**36.** The measuring device according to Claim 34,
wherein the computer makes an appropriate selection from a plurality of the specific environment temperature calculation tables and calculates the external environment temperature, either during or after charging.

**37.** The measuring device according to any of Claims 34 to 36, further comprising:

a determination component configured to determine whether or not the difference between the internal environment temperature measurement measured by the environment temperature sensor and the temperature data included in the environment temperature calculation table exceeds a specific range; and
an error notification component configured to judge an error to have occurred and notifying to that effect when it is determined by the determination component that the specific range has been exceeded.

**38.** The measuring device according to any of Claims 34 to 37,
wherein the computer uses shared information from the environment temperature calculation table after the completion of charging.

**39.** The measuring device according to any of Claims 34 to 38,
wherein the computer uses shared information from the environment temperature calculation table during a time period from right after the start of charging until a specific length of time has elapsed.

**40.** The measuring device according to Claim 28,
wherein the heat generating material is one or more of a secondary cell, a battery, a charger, a charging IC, a coil (inductor), and a resistor.

**41.** The measuring device according to Claim 40,
wherein the computer calculates the external environment temperature on the basis of the measurement result at the plurality of environment temperature sensors disposed inside the measuring device, regardless of whether or not charging is in progress.

**42.** The measuring device according to Claim 40,

wherein the computer makes an appropriate selection from the information in the plurality of specific environment temperature calculation tables and performs correction, either during or after charging.

**43.** The measuring device according to any of Claims 40 to 42, further comprising:

a determination component configured to determine whether or not the difference between the measurement results of the plurality of environment temperature sensors has exceeded a specific range; and
an error notification component configured to judge an error to have occurred and notifying to that effect when it is determined by the determination component that the specific range has been exceeded.

**44.** The measuring device according to Claim 43, wherein there are:

a first region provided near the heat generating material inside the housing, and
a second region provided at a different position from that of the first region inside the housing,
a plurality of environment temperature sensor are provided in each of the first and second regions,
the determination component determines whether or not either the difference between the detection results for internal environment temperature information at a plurality of environment temperature sensors provided in the first region, or the difference between the detection results for internal environment temperature information at a plurality of environment temperature sensor provided in the second region, has exceeded a specific range, and
the error notification component judges an error to have occurred and notifies to that effect when it is determined by the determination component that the difference has exceeded the specific range.

**45.** The measuring device according to Claim 34, comprising:

a remaining charge measurement component configured to measure the remaining charge of the secondary cell; and
a charging circuit configured to charge the secondary cell by supplying a specific current.

**46.** The measuring device according to Claim 45,
wherein the computer estimates the charging completion time for the secondary cell on the basis of the charging current, the remaining charge, and the internal environment temperature and operating time during heat generation of the secondary cell.

**47.** The measuring device according to Claim 45 or 46,
further having a display component configured to display various measurement information or status information, wherein the charging completion time is displayed on the display component.

FIG. 1

# FIG. 2

# FIG. 3

FIG. 4

FIG. 5

FIG. 6(a)

Measurement of various
correction categories

Various correction
category information

computer

information about
various correction
categories

environment
temperature
information

information about
environment
temperature during
charging

08

measurement object
concentration information

10

measurement
object
concentration

memory means — 8

display
component — 11

# FIG. 6(b)

## FIG. 7

Measuring device internal temperature versus elapsed charging time

## FIG. 8

Measuring device internal temperature versus elapsed charging time

# FIG. 9

**Charging mode (outside air 20°C)**

A interval    B interval    C point    D interval

# FIG. 10

**Measuring device internal temperature versus elapsed charging time**

deposition time

FIG. 11

( a )

( b )

FIG. 12

( a )

( b )

FIG. 13

FIG. 14

35

FIG. 15

FIG. 16

FIG. 17

FIG. 18(a)

Measurement of various
correction categories

Various correction
category information

computing means

information about
various correction
categories

environment
temperature
information

information about
environment
temperature during
charging

08

measurement object
concentration information

210

measurement
object
concentration

memory means — 208

display
component — 211

FIG. 18(b)

# FIG. 19(a)

Temperature information versus charging (outside air: 10°C)

# FIG. 19(b)

Temperature information versus charging (outside air: 20°C)

# FIG. 19(c)

Temperature information versus charging (outside air: 30°C)

# FIG. 20(a)

Temperature information versus charging (outside air: 10°C)

## FIG. 20(b)

Temperature information versus charging (outside air: 20°C)

## FIG. 20(c)

Temperature information versus charging (outside air: 30°C)

Temperature differential between temperature sensors 9b and 9a versus elapsed charging time

FIG. 21

| | Outside air 10°C | Outside air 20°C | Outside air 30°C |
|---|---|---|---|
| Actual outside air temperature at start of charging | 11.8°C | 21.6°C | 31.4°C |
| Temperature (T1) detected by temperature sensor 9a | 16.4°C | 26.4°C | 36.9°C |
| Environment temperature (T) calculated from Formula 1 | 12.3°C | 21.4°C | 32.4°C |
| Time after the start of charging | 16 minutes | 19 minutes | 20 minutes |

FIG. 22

# FIG. 23

**Measuring device internal temperature versus elapsed charging time**

outside air 30°C

outside air 20°C

outside air 10°C

Temperature (°C)

Charging time (min.)

# FIG. 24

**Temperature transition at end of charging (detail view)**

outside air 30°C

outside air 20°C

outside air 10°C

Temperature (°C)

Charging time (min.)

FIG. 25(a)

Temperature transition at end of charging
(outside air 30°C, detail view)

FIG. 25(b)

Temperature transition at end of charging
(outside air 20°C, detail view)

FIG. 25(c)

Temperature transition at end of charging
(outside air 10°C, detail view)

FIG. 26

## INTERNATIONAL SEARCH REPORT

| | International application No. |
|---|---|
| | PCT/JP2009/001425 |

A. CLASSIFICATION OF SUBJECT MATTER
*G01K7/00*(2006.01)i, *G01N27/26*(2006.01)i, *G01N27/28*(2006.01)i, *G01N27/327*
(2006.01)i, *G01N27/416*(2006.01)i

According to International Patent Classification (IPC) or to both national classification and IPC

B. FIELDS SEARCHED

Minimum documentation searched (classification system followed by classification symbols)
G01K7/00, G01N27/26, G01N27/28, G01N27/327, G01N27/416

Documentation searched other than minimum documentation to the extent that such documents are included in the fields searched
Jitsuyo Shinan Koho      1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 9-159541 A  (Oki Electric Industry Co., Ltd.), 20 June, 1997 (20.06.97), Claims 3, 5; Par. Nos. [0033] to [0036]; Fig. 3 (Family: none) | 1,26 |
| X | JP 2006-184129 A  (Toshiba Tec Corp.), 13 July, 2006 (13.07.06), Full text; all drawings (Family: none) | 1,2,26,33 |
| A | WO 2008/004565 A1  (Matsushita Electric Industrial Co., Ltd.), 10 January, 2008 (10.01.08), Full text; all drawings & EP 2040065 A1        & CA 2656952 A1 | 1,2,26,33 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 June, 2009 (23.06.09) | 30 June, 2009 (30.06.09) |

| Name and mailing address of the ISA/ Japanese Patent Office | Authorized officer |
|---|---|
| Facsimile No. | Telephone No. |

Form PCT/ISA/210 (second sheet) (April 2007)

## INTERNATIONAL SEARCH REPORT

International application No.

PCT/JP2009/001425

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:
   The matter common to the inventions of claims 1-25 is a temperature measuring method defined in claim 1, whereas the matter common to the inventions of claims 26-47 is a measuring device defined in claim 26.
   However, the international search has revealed that the above common matters are not novel since they are disclosed in document JP 9-159541 A (Oki Electric Industry Co., Ltd.), 20 June, 1997 (20.06.97), claims 3, 5, paragraphs [0033] to [0036], figure 3, (Family: none).
   Therefore, the common matters are not special technical features within the meaning of PCT Rule 13.2, second sentence.
   In consequence, since there is    (Continued to the extra sheet.)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1, 2, 26, 33

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/001425

Continuation of Box No.III of continuation of first sheet(2)

not one or more of the same or corresponding special technical features common to all the inventions of claims 1-47, the inventions of claims 1-47 do not satisfy the unity of invention.

This international application contains five inventions as listed below.

First Invention
Claims 1, 2, 26, 33 (the invention relating to calculating the external environment temperature outside the housing according to a table for environment temperature calculation stored in a storage provided in the housing at the external environment temperature calculating step)

Second Invention
Claims 3, 11-14, 28, 31, 40-44 (the invention relating to calculating the external environment temperature outside the housing according to the difference between the results of detection of internal environment temperature information obtained from environment temperature sensors provided in the housing and the operating time of the heating material at the external environment temperature calculating step)

Third Invention
Claims 4, 32 (the invention relating to further comprising a correcting step of performing temperature correction of various correction items by using the external environment temperature calculated at the external environment temperature calculating step)

Fourth Invention
Claims 5-10, 34-39, 45-47 (the invention relating to an environment temperature measuring method wherein the heating material is at least one of a secondary cell, a battery, a charger, a charging IC, a coil (inductor), and a resistor)

Fifth Invention
Claims 15-25, 27, 29, 30 (the invention relating to a liquid sample measuring method for measuring the concentration of a specific component of a liquid sample spotted on a biosensor attached to a measuring device in which a heating material and an environment temperature sensor are provided in a housing, wherein the method further comprises a specimen concentration measuring step of measuring the concentration of a specific component of the liquid sample spotted on the biosensor and an external environment temperature correcting step of correcting the concentration of the specific component according to the external environment temperature outside the housing)

Form PCT/ISA/210 (extra sheet) (April 2007)

**REFERENCES CITED IN THE DESCRIPTION**

**Patent documents cited in the description**

- JP 2007010317 A

- JP 2007526440 W